(19) Europäisches Patentamt
European Patent Office
Office européen des brevets

(11) EP 4 574 868 A1

(12) EUROPEAN PATENT APPLICATION

(43) Date of publication:
**25.06.2025 Bulletin 2025/26**

(21) Application number: **23307367.5**

(22) Date of filing: **22.12.2023**

(51) International Patent Classification (IPC):
***C08G 18/10*** *(2006.01)* ***C08G 18/20*** *(2006.01)*
***C08G 18/38*** *(2006.01)* ***C08G 18/76*** *(2006.01)*
***C08G 18/80*** *(2006.01)* ***C08L 75/04*** *(2006.01)*
***G02B 1/04*** *(2006.01)*

(52) Cooperative Patent Classification (CPC):
(C-Sets available)
**C08G 18/7642; C08G 18/10; C08G 18/2027; C08G 18/2063; C08G 18/2072; C08G 18/3876; C08G 18/8025; C08L 75/04; G02B 1/041** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Essilor International**
**94220 Charenton-Le-Pont (FR)**

(72) Inventors:
- **PHOMPAN, Waranya**
  **10520 Bangkok (TH)**
- **FROMENTIN, Pierre**
  **10240 Bangkok (TH)**

(74) Representative: **Jacobacci Coralis Harle**
**32, rue de l'Arcade**
**75008 Paris (FR)**

(54) **LATENT THERMAL BORATE-AMMONIUM OR IMINIUM SALTS AS CATALYSTS FOR POLYTHIOURETHANE BASED SUBSTRATES**

(57) The present invention relates to a method of fast curing a polythiourethane based transparent substrate, comprising in one of its embodiments providing a first component A comprising a polythiourethane pre-polymer A1 having isocyanate or isothiocyanate end groups, providing a second component B comprising a polythiourethane pre-polymer B1 having thiol end groups, mixing together first and second components A and B to form a polymerizable mixture, curing said mixture to obtain a transparent substrate, wherein at least one heat-activatable latent catalyst composed of a tertiary ammonium or tertiary iminium cation and a borate anion is added in the process prior to the curing step, and said latent catalyst is subsequently activated to accelerate the polymerization reaction forming the polythiourethane-based transparent substrate.



Processed by Luminess, 75001 PARIS (FR)

(Cont. next page)

(52) Cooperative Patent Classification (CPC): (Cont.)

C-Sets
**C08G 18/10, C08G 18/3876;**
**G02B 1/041, C08L 75/04, C08L 81/00**

## Description

The present invention relates to a process for manufacturing polythiourethane based substrates, and in particular optical substrates such as ophthalmic lenses, having generally a middle or high refractive index, preferably of at least 1.52, more preferably of at least 1.54, more preferably of at least 1.6 and even more preferably of at least 1.67, within short curing cycles, using a latent thermal catalyst, and polymerizable compositions that can be used in such a process.

BACKGROUND AND SUMMARY OF THE INVENTION

Ophthalmic lenses made of polythiourethane based substrates are typically made by a process comprising mixing appropriate monomers in a tank, such as a mixture of a polyisocyanate and a polythiol, adding catalyst and additive, filling a molding cavity with this liquid mixture of monomers, polymerizing the monomer mixture and thereafter recovering the polymerized polythiourethane based substrate from the mold. The mixture is usually subjected to a thermal cycle in an oven, for a typical duration of 20 hours.

It is known to reduce the time required to cure the polymerizable composition poured into mold assemblies by using oligomers rather than monomers. The monomers are first pre-reacted to form oligomers, then blended with a catalyst that provides a high overall reactivity in very small volume or even through in-line mixing equipment, then poured into mold assemblies that are subjected to a short polymerization cycle, typically few hours.

In this regard, US 2003/125410 discloses a method of fast curing polythiourethane transparent casted substrate, which comprises the steps of:

1) Providing a first component A comprising a polythiourethane pre-polymer having isocyanate or isothiocyanate end groups,
2) Providing a second component B comprising a polythiourethane pre-polymer having thiol end groups,
3) Mixing together first and second components A and B and filling a molding cavity of a casting mold assembly with the resulting mixture,
4) Curing said mixture to obtain a transparent solid substrate, in the presence of a catalyst to shorten the curing time of the polymerizable composition down to typically 2 hours.

A fast cure process is highly desirable over usual process as the shorter residence time in curing oven enables a dramatic productivity gain, complex and demanding lens geometries can be obtained in better yield as the final polymerizable mixture shrinkage is lower than that of mixture obtained directly from monomers, and energy consumption during polymerization cycles is reduced.

Provided that the viscosity is controlled, batch mixing of such mixtures is inherently safer than usual process from monomers, as part of the available bond forming energy has already been released during the oligomers formation (pre-polymerization), which limits formation of local heat points in the final polymerizable mixture. The use of pre-polymers allows stable and steady reaction.

In applications EP 3916470 and EP 3919967, a different approach for fast curing a polythiourethane optical material has been chosen, combining the use of monomers and pre-polymers in the presence of a polymerization catalyst.

Polythiourethane synthesis can be catalyzed by a wide variety of bases or Lewis acids. When basic catalysts are selected, they activate the thiol by forming the corresponding thiolate anion which is the species that attacks the iso(thio) cyanate carbon atom (nucleophilic activation).

Known catalysts include dibutyltin dichloride, nitrogen containing heterocycles, amines, or a mixture of KSCN and 18-crown-6. However, in the presence of such catalysts, it is difficult to control the reaction rate. Once initiated, the reaction forming the polythiourethane network is very fast and the system is difficult to process due to the high reactivity of the species involved in the reaction. When all ingredients are mixed together, the viscosity of the mixture increases quickly as the ingredients react to form species with increased molecular weight, and a gel is obtained at room temperature in less than 10 minutes.

Consequently, a major technical problem of the fast cure process described in the prior art is the short pot life of the polymerizable mixture, leading to a huge constraint on mixing/filling step as only a short time is allowed to achieve highly intimate mixing of very viscous pre-polymers before gelling. A polymerizable mixture having a longer pot life, i.e., a longer time range before reaching a viscosity where it is not anymore handleable (mixing/filing), would thus be a great advantage to extend mixing time, especially critical as the mixture is highly viscous. In addition, such a mixture could be advantageously processed in batches, similarly to the usual process starting from monomers.

To reduce the speed of the reaction, latent catalysts, which release the active catalyst after the application of an external stimulus, have been proposed.

EP 0182203 describes a method for preparing a polyurethane product by the reaction of a polyisocyanate with a

polyol in the presence of a catalyst system consisting essentially of a tertiary amine and 1 to 35 wt. %, based on the tertiary amine, of an organic acid salt of a quaternary ammonium compound having a N-hydroxyalkyl group. The catalyst is used to delay the initiation time.

European patent application n° 22305961.9 discloses a method of fast curing a polythiourethane based transparent casted substrate, usable for making optical articles such as ophthalmic lenses, which comprises the use of a latent catalyst that is heat-activatable to accelerate the polymerization reaction forming the substrate. The catalysts used in this application are nitrogen containing basic organic compounds blocked by isocyanates or salts of these compounds with benzoic acid. However, the pot life of the polymerizable mixture still needs to be improved.

WO 2023/063398 discloses another approach by using a photocurable composition comprising a polyiso(thio) cyanate compound, a polythiol compound and a base generator for producing a transparent polythiourethane resin. The base generator is composed of a borate anion and various ammonium or iminium cations. The photocurable composition is cured by irradiation with ultraviolet rays or visible light. By irradiating the base generator with light, a base can be generated and the polymerization reaction can proceed. However, UV absorbers present in the substrate can interfere and inhibit photolysis of the base generator.

Thus, the aim of the present invention is to provide a method of fast curing a polythiourethane based transparent substrate which remedies to the drawbacks of the prior art methods in terms of limited pot life of the polymerizable mixture.

Another object of the invention is to provide a method of fast curing polythiourethane based transparent substrates substantially free from optical defects, in particular free from bubbles and/or striations resulting from the polymerization process.

The present inventors found that the reactivity of the polymerizable mixture could be minimized by using specific catalysts that are blended under an inactive form and display essentially no catalytic effect in the polymerizable mixture, while being subsequently triggered to form the final polythiourethane based polymer. These latent catalysts allow a better control of the curing initiation of the polymerizable mixture containing pre-polymers than traditionally used non-latent catalysts such as tin catalysts, or other latent catalysts.

The present invention provides a process of curing a polythiourethane-based transparent substrate, usable for making optical articles such as ophthalmic lenses, comprising the following steps 1), 2), 3), 4) and 5), 1), 2'), 3), 4) and 5) or 1'), 2), 3), 4) and 5):

1) Providing a first component A comprising at least one polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer, or
1') Providing a first component A comprising at least one polyisocyanate or polyisothiocyanate monomer A2,
2) Providing a second component B comprising at least one polythiourethane pre-polymer B1 having thiol end groups, said pre-polymer B1 having been prepared from at least one polythiol monomer and at least one polyisocyanate or polyisothiocyanate monomer, or
2') Providing a second component B comprising at least one polythiol monomer B2,
3) Mixing together first and second components A and B to form a polymerizable mixture,
4) Curing said polymerizable mixture to obtain a polythiourethane-based transparent substrate, and
5) Recovering the polythiourethane-based transparent substrate,

wherein at least one heat-activatable latent catalyst composed of a tertiary ammonium or tertiary iminium cation and a borate anion of formula (1b), in which $R^a$, $R^b$, $R^c$ and $R^d$ independently represent a (hetero)aryl group or a substituted or unsubstituted alkyl group, is added in the process prior to curing step 4),

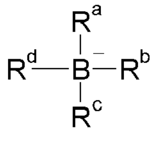
(1b)

and said latent catalyst is subsequently activated to accelerate the polymerization reaction forming the polythiourethane-based transparent substrate.

The present process offers several advantages in addition to those mentioned above. The latent catalyst according to the invention allows a good control of the curing process, avoids premature gelling of the polymerizable mixture, while reaching a complete curing at moderated temperatures.

The polythiourethane materials obtained from polymerization catalyzed by the latent catalysts according to the invention have similar mechanical and thermal characteristics to the ones obtained by using the commonly used non-latent catalysts, or other latent catalysts. The conversion levels obtained are similar.

The invention also relates to a polymerizable mixture comprising the above defined latent catalyst, which exhibits an improved processability and shelf life.

The reactivity of the finally formulated polymerizable mixture is essentially the same as that of an uncatalyzed blend, and it can be flowed through pipe to filling stations with less risks of clogging from local gelling.

All components can be admixed together, including the catalyst, over a period of time that is compatible with a very high level of mixing state, reducing inhomogeneities and optical defects likeliness such as striations.

The foregoing and other objects, features and advantages of the present invention will become readily apparent to those skilled in the art from a reading of the detailed description hereafter when considered in conjunction with the accompanying drawings, wherein figures 1-4 depict the viscosity index (viscosity at time t / initial viscosity) as a function of the storage time for various weight amounts of catalysts and comparative catalysts, and figure 5 depicts the slope of viscosity increase over time as a function of the catalyst content for various catalysts and comparative catalysts in order to compare their reactivity.

## DETAILED DESCRIPTION OF THE INVENTION

The substrate of the invention is an organic glass substrate, made from a thermosetting resin. The polymer matrix of substrate is obtained from a material composition ("substrate composition") comprising at least one polymerizable pre-polymer, preferably at least two.

The substrate is preferably an optical article substrate, more preferably an optical lens substrate. The optical article is preferably an ophthalmic lens, such as a plastic eyeglass lens.

In the present description, unless otherwise specified, a substrate is understood to be transparent when the observation of an image through said substrate is perceived with no significant loss of contrast, that is, when the formation of an image through said substrate is obtained without adversely affecting the quality of the image. This definition of the term "transparent" can be applied to all objects qualified as such in the description, unless otherwise specified.

The term "ophthalmic lens" is used to mean a lens adapted to a spectacle frame to protect the eye and/or correct the sight. Said lens can be chosen from afocal, unifocal, bifocal, trifocal, progressive lenses and Fresnel lenses or any other kind of lenses having a discontinuous surface. Although ophthalmic optics is a preferred field of the invention, it will be understood that this invention can be applied to optical elements of other types such as, for example, lenses for optical instruments, filters particularly for photography or astronomy, optical sighting lenses, ocular visors, optics of lighting systems, screens, glazings, etc.

If the optical article is an optical lens, it may be coated on its front main surface, rear main side, or both sides with one or more functional coatings. As used herein, the rear face of the substrate is intended to mean the face which, when using the article, is the nearest from the wearer's eye. It is generally a concave face. On the contrary, the front face of the substrate is the face which, when using the article, is the most distant from the wearer's eye. It is generally a convex face. The optical article can also be a plano article.

A substrate, in the sense of the present invention, should be understood to mean an uncoated substrate, and generally has two main faces. The substrate may in particular be an optically transparent material having the shape of an optical article, for example an optical lens or an ophthalmic lens destined to be mounted in glasses. In this context, the term "substrate" is understood to mean the base constituent material of the optical lens and more particularly of the ophthalmic lens. This material may act as support for a stack of one or more coatings or layers.

The refractive index of the polythiourethane based transparent substrate is preferably 1.52 or greater, more preferably 1.54 or greater, more preferably 1.56 or greater, more preferably 1.58 or greater, more preferably 1.60 or greater, and still more preferably 1.65 or greater, and it is preferably 1.80 or less, more preferably 1.70 or less, and still more preferably 1.67 or less. Unless otherwise specified, the refractive indexes referred to in the present application are expressed at 25°C at a wavelength of 550 nm.

The fast cure polymerizable composition leading to a polythiourethane based material is composed of two main components.

In a first embodiment of the invention, the first component A is comprised of a polythiourethane pre-polymer A1 having isocyanate (NCO) or isothiocyanate (NCS) end groups. The second component B is comprised of a polythiourethane pre-polymer B1 having thiol (SH) end groups.

In step 1) of the present process, a first component A comprising a polythiourethane pre-polymer A1 having isocyanate or isothiocyanate end groups is provided and has been prepared from at least one polythiol monomer and at least one polyisocyanate or polyisothiocyanate monomer, the latter being used in excess. The first component A comprises therefore oligomers and the initial monomers that did not polymerize.

In step 2) of the present process, a second component B comprising a polythiourethane pre-polymer B1 having thiol end groups is provided and has been prepared from at least one polythiol monomer and at least one polyisocyanate or polyisothiocyanate monomer, the former being used in excess. The second component B comprises therefore oligomers and the initial monomers that did not polymerize.

In a second embodiment of the invention, the first component A is comprised of a polythiourethane pre-polymer A1 having isocyanate (NCO) or isothiocyanate (NCS) end groups (step 1). The second component B is comprised of at least one polythiol monomer B2 (step 2').

In a third embodiment of the invention, the first component A is comprised of at least one polyisocyanate or polyisothiocyanate monomer A2 (step 1'). The second component B is comprised of a polythiourethane pre-polymer B1 having thiol (SH) end groups (step 2).

Compared to prior art processes which use only iso(thio)cyanate or thiol monomers, the present invention uses at least one pre-polymer.

By pre-polymer, it is meant a polymer or oligomer comprising pre-polymer molecules. By pre-polymer molecule, it is meant a macromolecule or oligomer molecule capable of entering, through reactive (polymerizable) groups, into further polymerization, thereby contributing more than one monomeric unit to at least one chain of the final macromolecule. It is generally formed from two or more different monomers.

The polythiourethane pre-polymer A1 having isocyanate or isothiocyanate end groups is prepared by reacting at least one polyisocyanate or polyisothiocyanate monomer and at least one polythiol monomer in a proportion such that the molar ratio of isocyanate or isothiocyanate groups to thiol groups NCX/SH preferably ranges from 3:1 to 30:1, preferably in the absence of a catalyst, X being O or S.

The polythiourethane pre-polymer B1 having thiol end groups is prepared by reacting at least one polyisocyanate or polyisothiocyanate monomer and at least one polythiol monomer in a proportion such that the molar ratio of the thiol groups to the isocyanate or isothiocyanate groups SH/NCX preferably ranges from 3:1 to 30:1, preferably in the absence of a catalyst, X being O or S.

Polythiol and polyisocyanate or polyisothiocyanate compounds used to prepare polythiourethane pre-polymer A1 or B1 are considered herein as monomers, even when they are oligomers.

By polyisocyanate, it is meant any compound comprising at least two isocyanate groups, in other words diisocyanates, triisocyanates, etc. Polyisocyanate pre-polymers may be used. The polyisocyanate may be any suitable polyisocyanate having two or more, preferably two or three isocyanate functions.

The polyisocyanates may be selected from aliphatic, aromatic, cycloaliphatic or heterocyclic polyisocyanates and mixtures thereof.

Polyisothiocyanate are defined in the same manner as polyisocyanates above, by replacing the "isocyanate" group by the "isothiocyanate" group.

The preferred polyisocyanate or isothiocyanate monomers are those having the formulae:

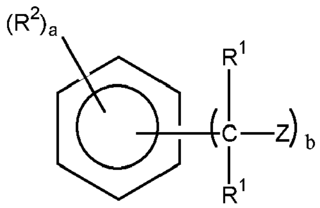

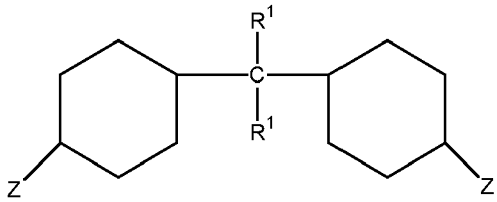

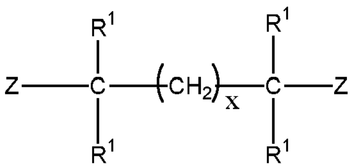

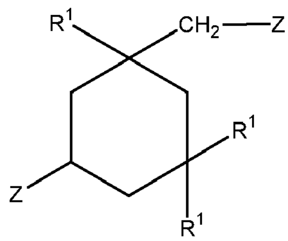

wherein $R^1$ is independently H or a $C_1$-$C_5$ alkyl group, preferably $CH_3$ or $C_2H_5$;
$R^2$ is H, a halogen, preferably Cl or Br, or a $C_1$-$C_5$ alkyl group, preferably $CH_3$ or $C_2H_5$;
Z is -N=C=X, with X being O or S, preferably O;
a is an integer ranging from 1 to 4, b is an integer ranging from 2 to 4 and $a + b \leq 6$; and
x is an integer from 1 to 10, preferably 1 to 6.

The polyisocyanates of the invention are preferably diisocyanates. Among the available diisocyanates may be cited toluene-2,4-diisocyanate, toluene-2,6-diisocyanate, diphenylmethane-4,4'-diisocyanate, diphenylmethane-2,4'-diisocyanate, paraphenylene diisocyanate, xylylene diisocyanate, biphenyl-diisocyanate, 3,3'-dimethyl-4,4'-diphenylene

diisocyanate, tetramethylene-1,4-diisocyanate, hexamethylene-1,6-diisocyanate, 2,2,4-trimethyl hexane-1,6-diisocyanate, lysine methyl ester diisocyanate, bis(isocyanatoethyl) fumarate, isophorone diisocyanate (IPDI), ethylene diisocyanate, dodecane-1,12-diisocyanate, cyclobutane-1,3-diisocyanate, cyclohexane-1,3-diisocyanate, cyclohexane-1,4-diisocyanate, methylcyclohexyl diisocyanate, hexahydrotoluene-2,4-diisocyanate, hexahydrotoluene-2,6-diisocyanate, hexahydrophenylene-1,3-diisocyanate, hexahydrophenylene-1,4-diisocyanate, perhydro diphenylmethane-2,4'-diisocyanate, perhydro phenylmethane-4,4'-diisocyanate (or bis-(4-isocyanatocyclohexyl)-methane, or 4,4'-dicyclohexylmethanediisocyanate), bis(isocyanatomethyl) cyclohexane, dicyclohexylmethane diisocyanate, 2,5(or 2,6)-bis(isocyanatomethyl)bicyclo-[2.2.1]-heptane, and their mixtures.

Other non-limiting examples of polyisocyanates are the isocyanurates from isophorone diisocyanate and 1,6-hexamethylene diisocyanate, both of which are commercially available. Further polyisocyanates suitable for the present invention are described in detail in WO 98/37115, WO 2014/133111 or EP 1877839.

The polythiols that may be used in the present invention are defined as compounds comprising at least two sulfhydryl (mercapto) groups, in other words dithiols, trithiols, tetrathiols etc. Polythiols pre-polymers may be used. The polythiol may be any suitable polythiol having two or more, preferably two or three thiol functions.

Among the preferred polythiol monomers and/or oligomers suitable in accordance with the present invention, there may be cited aliphatic polythiols such as trimethylolpropanetris(2-mercaptoacetate), trimethylolpropanetris(3-mercaptopropionate), trimethylolethanetris(2-mercaptoacetate), trimethylolethanetris(3-mercaptopropionate), pentaerythritol tetrakis(2-mercaptoacetate), pentaerythritol tetrakis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptopropyl)disulfide, 2,3-bis((2-mercaptoethyl)thio)-1-propanethiol, 4,8(or 4,7 or 5,7)-dimercaptomethyl-1,11-dimercapto-3,6,9-trithiaundecane, 2,5-dimercaptomethyl-1,4-dithiane, and 2,5-bis[(2-mercaptoethyl)thiomethyl]-1,4-dithiane, 1-(1'-mercaptoethylthio)-2,3-dimercaptopropane, 1-(2'-mercapropylthio)-2,3-dimercaptopropane, 1-(3'-mercapropylthio)-2,3-dimercaptopropane, 1-(4'-mercabutylthio)-2,3-dimercaptopropane, 1-(5'-mercapentylthio)-2,3-dimercaptopropane, 1-(6'-mercahexylthio)-2,3-dimercaptopropane, 1,2-bis-(4'-mercaptobutylthio)-3-mercaptopropane, 1,2-bis-(5'-mercaptopentylthio)-3-mercaptopropane, 1,2-bis-(6'-mercaptohexylthio)-3-mercaptopropane, 1,2,3-tris(mercaptomethylthio)propane, 1,2,3-tris-(3'-mercaptopropylthio)propane, 1,2,3-tris-(2'-mercaptoethylthio)propane, 1,2,3-tris-(4'-mercaptobutylthio)propane, 1,2,3-tris-(6'-mercaptohexylthio)propane, methanedithiol, 1,2-ethanedithiol, 1,1-propanedithiol, 1,2-propanedithiol, 1,3-propanedithiol, 2,2-propanedithiol, 1,6-hexanethiol-1,2,3-propanetrithiol, and 1,2-bis(2'-mercaptoethylthio)-3-mercaptopropane. Further examples of polythiols are shown in the formulae below or can be found in WO 2014/133111, EP 394495, US 4775733 or EP 1877839:

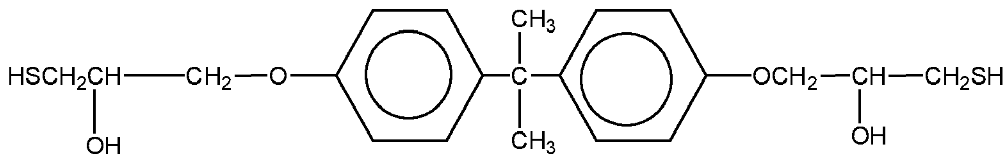

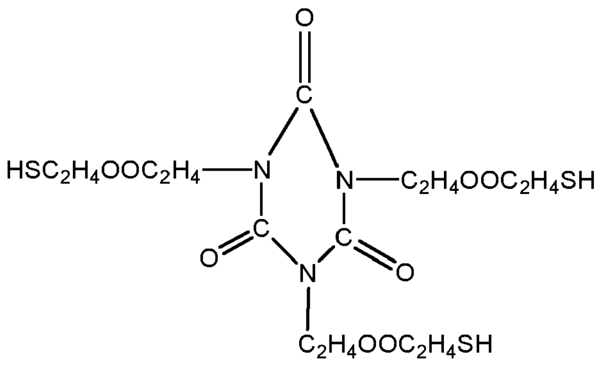

,

and

$C_2H_5C(CH_2COOCH_2CH_2SH)_3$

Preferred embodiments are combination of xylylene diisocyanate and pentaerythritol tetrakis(3-mercaptopropionate); combination of xylylene diisocyanate and 2,3-bis((2-mercaptoethyl)thio)-1-propanethiol; combination of 2,5 (or 2,6)-bis(isocyanatomethyl)bicyclo-[2.2.1]-heptane, pentaerythritol tetrakis(3-mercaptopropionate) and 2,3-bis((2-mercaptoethyl)thio)-1-propanethiol; combination of xylylene diisocyanate and 4,8(or 4,7 or 5,7)-dimercaptomethyl-1,11-dimercapto-3,6,9-trithiaundecane; combination of dicyclohexylmethane diisocyanate and 4,8(or 4,7 or 5,7)-dimercaptomethyl-1,11-dimercapto-3,6,9-trithiaundecane; or a combination of bis(2,3-epithiopropyl)disulfide and 4,8(or 4,7 or 5,7)-dimercaptomethyl-1,11-dimercapto-3,6,9-trithiaundecane. The most preferred polythiol is 2,3-bis((2-mercaptoethyl)thio)-1-propanethiol, shown below:

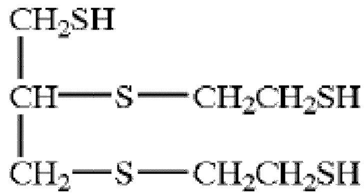

Preferably the polythiols have a viscosity at 25°C of 1 Pa.s or less, more preferably $5.10^{-1}$ Pa.s or less, more preferably $2.5.10^{-1}$ Pa.s or less, more preferably $2.10^{-1}$ Pa.s or less, more preferably $10^{-1}$ Pa.s or less and even more preferably of $0.5.10^{-1}$ Pa.s or less.

Depending on the embodiment of the invention, components A and B are prepared by polymerizing mixtures of required amounts of at least one polyisocyanate and/or at least one polyisothiocyanate monomer and at least one polythiol monomer (steps 1 and 2), and optionally polyols monomers, hydroxy-thiol monomers and/or polyamines monomers. Typically, components A and B can be prepared through classical thermal polymerization including induction and infrared heating.

The amounts of polyisocyanate or polyisothiocyanate monomers and polythiol monomers in the reaction medium are preferably adapted in each case in such a way that the molar ratio of NCX/SH groups for the mixture of polyisocyanate or polyisothiocyanate monomers and polythiol monomers ranges from 3:1 to 30:1 for the preparation of polythiourethane pre-polymer A1, preferably from 6:1 to 10:1, and/or the molar ratio of SH/NCX groups for the mixture of polyisocyanate or polyisothiocyanate monomers and polythiol monomers ranges from 3:1 to 30:1 for the preparation of polythiourethane pre-polymer B1, preferably from 6:1 to 10:1, X being O or S.

In one embodiment, both components A and B are prepared without the use of a catalyst system, which allows better control of the polymerization reaction and results in pre-polymers of high stability in time. However, they can be prepared using a catalyst or catalyst system as described above.

Generally, in the first embodiment of the invention, the at least one pre-polymer A1 and the at least one pre-polymer B1 are comprised in the mixture in an amount such that the molar ratio of NCX to SH groups is from 0.8 to 1.2, preferably 1.

Generally, in the second embodiment of the invention, the at least one pre-polymer A1 and the at least one polythiol monomer are comprised in the mixture in an amount such that the molar ratio of NCX to SH groups is from 0.8 to 1.2, preferably 1.

Generally, in the third embodiment of the invention, the at least one polyisocyanate or polyisothiocyanate monomer and the at least one pre-polymer B1 are comprised in the mixture in an amount such that the molar ratio of NCX to SH groups is from 0.8 to 1.2, preferably 1.

Generally, in the second embodiment of the invention, the pre-polymer A1 and the polythiol of component B are comprised in the mixture in an amount such that the molar ratio of NCX to SH groups is from 0.8 to 1.2, preferably 1.

Generally, in the third embodiment of the invention, the polyisocyanate or polyisothiocyanate of component A and the pre-polymer B1 are comprised in the mixture in an amount such that the molar ratio of NCX to SH groups is from 0.8 to 1.2, preferably 1.

Preparation of pre-polymer B1 having thiol end groups has already been described in US 5908876. Similar process can be used to prepare component B of the present invention.

When component A of the present invention comprises polythiourethane pre-polymer A1, it can be prepared in a similar manner but with the required ratio of polyisocyanate or polyisothiocyanate and polythiol monomers in order to obtain polythiourethane pre-polymer A1 having isocyanate or isothiocyanate end groups.

In one embodiment, the polythiourethane pre-polymerA1 and/or B1 is prepared by directly blending the total amount of the two monomers (the at least one polyisocyanate or polyisothiocyanate monomer and the at least one polythiol monomer) and subjecting the overall mixture to a thermal treatment to enable the pre-polymer formation. Stated otherwise, in this embodiment, the polythiourethane pre-polymer is directly prepared by mixing the at least one polyisocyanate or polyisothiocyanate monomer and the at least one polythiol monomer at the desired ratio.

In another embodiment, the polythiourethane pre-polymer A1 and/or B1 is prepared by firstly blending the minor monomer with a part of the major monomer, secondly subjecting this mixture to a thermal polymerization treatment to enable oligomer formation, and thirdly diluting this concentrated mixture with the remaining part of major monomer. This way of proceeding generally leads to an improvement of the thermal properties of the final polythiourethane polymer.

The mixture polythiol/polyiso(thio)cyanate from which pre-polymer A1 is obtained may comprise 90% or less by

weight of at least one polyol. Preferably, said mixture may comprise 80% or less, 70% or less, 60% or less, 50% or less, 40% or less, 30% or less, 20% or less, 10% or less by weight of at least one polyol. Also preferably, no polyol is used. Polyiso(thio)cyanate means polyisocyanate or polyisothiocyanate.

The mixture polythiol/polyiso(thio)cyanate from which pre-polymer B1 is obtained may comprise 90% or less by weight of at least one polyol. Preferably, said mixture may comprise 80% or less, 70% or less, 60% or less, 50% or less, 40% or less, 30% or less, 20% or less, 10% or less by weight of at least one polyol. Also preferably, no polyol is used.

The mixture of components A and B according to the invention may also include additives which are conventionally employed in polymerizable compositions intended for molding optical articles, in particular ophthalmic lenses, in conventional proportions, namely inhibitors, dyes, photochromic agents, UV absorbers, perfumes, deodorants, antioxidants, resin modifiers, color balancing agents, chain extenders, crosslinking agents, free radical scavengers such as antioxidants or hindered amine light stabilizers (HALS), dyes, pigments, fillers, adhesion accelerators, anti-yellowing agents and mold release agents.

In one embodiment, the additives are added to first component A prior to the mixing with second component B.

UV absorbers are frequently incorporated into optical articles in order to reduce or prevent UV light from reaching the retina (in particular in ophthalmic lens materials). The UV absorber that may be used in the present invention preferably have the ability to at least partially block light having a wavelength shorter than 400 nm, but can also have an absorption spectrum extending to the visible blue light range of the electromagnetic spectrum (400 - 450 nm), in particular 420-450 nm.

Said UV absorbers both protect the user's eye from UV light and the substrate material itself, thus preventing it from weathering and becoming brittle and/or yellow. The UV absorber according to the invention can be, without limitation, a benzophenone-based compound, a benzotriazole-based compound, or a dibenzoylmethane-based compound, preferably a benzotriazole compound. Suitable UV absorbers include without limitation 2-(2-hydroxyphenyl)-benzotriazoles such as 2-(2-hydroxy-3-tert-butyl-5-methylphenyl)-5-chlorobenzotriazole (Seesorb® 703 / Tinuvin® 326), or other allyl hydroxymethylphenyl chlorobenzotriazoles, 2-(5-chloro-2H-benzotriazol-2-yl)-6-(1,1-dimethylethyl)-4-methylphenol (Viosorb® 550), n-octyl-3-[3-tert-butyl-4-hydroxy-5-(5-chloro-2H-benzotriazol-2-yl)phenyl] propionate (Eversorb® 109), 2-(2-hydroxy-5-methoxyphenyl)benzotriazole, 2-(2-hydroxy-5-butoxyphenyl)benzotriazole and also Tinuvin®CarboProtect® from BASF. Preferred absorbers are of the benzotriazole family. Other examples of benzotriazole UV absorbers protecting from blue light can be found in WO 2017/137372.

The amount of UV absorber compounds according to the invention used herein is an amount sufficient to provide a satisfactory protection from UV light but not excessive so as to prevent precipitation. The UV absorber compounds are generally present in an amount ranging from 0.05 to 4 % by weight relative to the optical material total weight (or per 100 parts by weight of the polymerizable compounds present in the mixture of components A and B or relative to the weight of the optical material composition), preferably from 0.1 to 3 % by weight, more preferably from 0.1 to 2 % by weight.

Among the release agents that may be used in the invention, there may be cited mono and dialkyl phosphates, alkyl ester phosphates, silicones, fluorinated hydrocarbon, fatty acids and ammonium salts. The preferred release agents are mono and dialkyl phosphates, alkyl ester phosphates and mixtures thereof. Such release agents are disclosed inter alia in US 4975 328 and EP 271839. The release agent is preferably used in an amount lower than or equal to 1% by weight based on the total weight of the polymerizable compounds present in the mixture of components A and B.

The polymerizable mixture of the present invention can comprise a solvent for promoting the dissolution of the catalyst, which is under the form of a salt.

Any polar organic solvent can be used such as acetonitrile, tetrahydrofuran, dioxane, ethanol, thioethanol, acetone, and 3-methyl-2-butene-1-ol. The amount of solvent is generally kept below 2% by weight, based on the total weight of the polymerizable compounds present in the mixture of components A and B and preferably from 0 to 0.5% by weight, to avoid haze and bubbling.

In the present invention, at least one latent catalyst according to the invention that is heat-activatable is added in the process prior to curing step 4), and said latent catalyst is subsequently activated to accelerate the polymerization reaction forming the polythiourethane based transparent substrate.

The catalyst is a system for accelerating the polymerization reaction. The catalyst used in the present process can comprise one or more latent thermal catalysts and preferably only comprises latent thermal catalysts according to the invention, i.e., composed of a tertiary ammonium or iminium cation and a borate anion of formula (1b). The catalyst used in the present process is in fact a pre-catalyst that leads to the active form of the catalyst upon activation.

The catalyst shall be used in the polymerizable composition in an effective amount, i.e., an amount sufficient to promote the polymerization of the mixture. Generally, the at least one catalyst is used in a proportion of 0.01 to 5% by weight with respect to the total weight of polymerizable compounds present in the mixture of components A and B, more preferably from 0.02 to 2% or 0.04 to 1%.

As used herein, a latent catalyst, or blocked/triggerable catalyst, is a catalyst that displays a delayed action. The latent catalyst will not display a significant catalytic effect, i.e., will not significantly react with active SH, NCO and/or NCX groups until activated. In the present invention, the latent catalyst can be activated by heat. Depending on its nature, it can

also be activated by radiation.

The latent catalyst according to the invention generally provides the polymerizable composition with a pot life that is significantly greater than the pot life provided by conventional latent or non-latent catalysts or the pot life provided by said latent catalyst once activated. For example, said pot life is of 8 hours or more and is preferably of 1 day or more. The pot life is the time during which a fully formulated polymerizable composition has a viscosity such that it is pourable, e.g., processable (typically filling in the assemblies).

The latent catalyst is generally activated during curing step 4). If the latent catalyst was activated during the mixing step 3), the pot life of the mixture would be shortened. The mixture could become too viscous too soon and the molds might not be filled properly.

The latent catalyst that is heat-activatable is preferably activated by heating at a temperature of at least 35°C or 40°C, preferably at least 50°C, more preferably at least 60, 70, 75, 80, 100 or 120°C. The activation temperature of the latent catalyst generally ranges from 40°C to 120°C. It is generally inactive at room temperature (20-25°C) and will not significantly react until reaching its activation temperature.

The latent catalyst can be added at different stages of the present process.

In one embodiment, the catalyst is added to the polythiol and polyisocyanate or polyisothiocyanate monomers during the preparation of the polythiourethane pre-polymer A1 having isocyanate or isothiocyanate end groups or to the polythiol and polyisocyanate or polyisothiocyanate monomers during the preparation of the polythiourethane pre-polymer B1 having thiol end groups, or to the polyisocyanate or polyisothiocyanate monomers during the preparation of component A, or to the polythiol monomers during the preparation of component B, depending on the case.

In this embodiment, the latent catalyst that is heat-activatable, has an activation temperature that should be higher than the oligomerization temperature used for forming pre-polymer A1 or pre-polymer B1, depending on the case. Otherwise, the catalyst could be activated in a too early stage during the polythiourethane pre-polymer preparation and the pot life of the mixture would be shortened.

In this embodiment, it is preferred to work under conditions that do not allow activation of the latent catalyst that is heat-activatable according to the invention, such as at a temperature lower than its activation temperature, for example at room temperature if the monomers are sufficiently reactive to form the pre-polymer at this temperature.

In a preferred embodiment, the catalyst is added to the first component A obtained in step 1) or 1') prior to mixture with component B or to the second component B obtained in step 2) or 2') prior to mixture with component A. In this embodiment, the catalyst is added to pre-polymers A1 and/or B1 after their preparation, depending on the case.

In another preferred embodiment, the catalyst is added to the mixture of components A and B in step 3) of the present process.

The heat-activatable latent catalyst according to the invention is composed of a tertiary ammonium or iminium cation and a borate anion of formula (1b), in which $R^a$, $R^b$, $R^c$ and $R^d$ independently represent a (hetero)aryl group or a substituted or unsubstituted alkyl group:

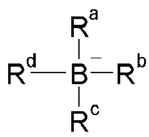

(1b)

By ammonium cation, it is meant a cation having a positively charged nitrogen atom ($N^+$) with only univalent groups bonded to said nitrogen atom. A tertiary ammonium cation derives from the parent $NH_4^+$ cation by substitution of three hydrogen atoms with three univalent groups and includes the structure $NH^+$.

By iminium cation, it is meant a cation that includes a carbon-nitrogen double bond with the structure $C=N^+$. The latter structure can be part of an aromatic ring. Examples of iminium compounds include guanidinium, amidinium, pyridinium, pyrazolium and imidazolium compounds. A tertiary iminium cation includes the structure $C=NH^+$; it has a positively charged nitrogen atom involved in a carbon-nitrogen double bond that bears one hydrogen atom and one univalent group different from a hydrogen atom, in at least one of its mesomeric forms.

The tertiary ammonium or iminium cations have only one hydrogen atom on the positively charged nitrogen atom and are generally weak acids. The non-hydrogen groups born by the positively charged nitrogen atom are preferably connected through a carbon atom.

In one embodiment, said tertiary ammonium or iminium cation is a compound of formula (1a):

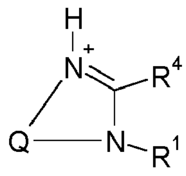

(1a)

in which $R^1$ represents a (hetero)aryl group, a substituted or unsubstituted alkyl group and $R^4$ represents a hydrogen atom, a (hetero)aryl group, a substituted or unsubstituted alkyl group or $R^1$ and $R^4$ together form a saturated divalent radical of formula $-R^1-R^4-$, and Q represents:

- an alkylene group of formula $(CH_2)_m$, m being 2 or 3, or
- a group of formula (4):

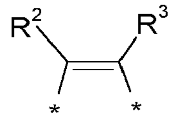

(4)

in which $R^2$ and $R^3$ independently represent a hydrogen atom, a (hetero)aryl group or a substituted or unsubstituted alkyl group or $R^2$ and $R^3$ together form, with the two carbon atoms they are attached to, a 5- or 6-member (hetero) aromatic group or a saturated divalent radical of formula $-R^2-R^3-$, and -- * denotes the attachment point of group (4) in formula (1a).

In the present application, the term "alkyl" denotes a linear or branched, cyclic or acyclic, saturated or unsaturated hydrocarbon-based radical connected to the rest of the molecule via an $sp^3$ carbon atom, containing preferably from 1 to 25 carbon atoms, especially including acyclic groups containing from 1 to 8 carbon atoms such as methyl, ethyl, n-propyl, isopropyl, n-butyl and n-hexyl groups, cycloalkyl groups preferably containing from 3 to 7 carbon atoms, cycloalkylmethyl groups preferably containing from 4 to 8 carbon atoms.

By "substituted alkyl" is understood an alkyl group as defined above, connected to the rest of the molecule via an $sp^3$ carbon atom and in which one or more methylene hydrogen atoms are replaced with a substituent. The substituted alkyl group can be substituted by one or a plurality of aryl groups and/or one or a plurality of heteroatoms such as N, S, O or a halogen atom (fluorine, chlorine, bromine or iodine). Mention will be made by way of examples of arylalkyl groups (alkyl group substituted with at least one aryl group) such as the trityl group (-CPh$_3$), the benzyl group or the 4-methoxybenzyl group, alkoxyalkyl groups, such as the methoxymethyl group or dialkoxymethyl groups such as the diethoxymethyl or dimethoxymethyl groups, the groups $CH_2CO_2R^{11}$, wherein $R^{11}$ represents an optionally substituted alkyl or aryl group.

The term "aryl" denotes an aromatic monovalent carbocyclic radical, connected by an $sp^2$ carbon atom, including a single ring (for example a phenyl group) or multiple condensed rings (for example the naphthyl, terphenyl groups), which may optionally be substituted by one or a plurality of groups such as, without limitation, alkyl (for example methyl), hydroxyalkyl, aminoalkyl, hydroxyl, thiol, amino, halogeno (fluoro, bromo, iodo, chloro), nitro, alkylthio, alkoxy (for example methoxy), aryloxy, mono-alkylamino, dialkylamino, acyl, carboxyl, alkoxycarbonyl, aryloxycarbonyl, hydroxysulphonyl, alkoxysulphonyl, aryloxysulphonyl, alkylsulphonyl, alkylsulphinyl, cyano, trifluoromethyl, tetrazolyl, carbamoyl, alkylcarbamoyl, dialkylcarbamoyl groups. Alternatively, two adjacent positions of the aromatic ring may be substituted by a methylenedioxyl or ethylenedioxyl group. The aryl group preferably comprises from 6 to 15 carbon atoms.

The term "heteroaryl" denotes an aryl group as defined above, connected to the rest of the molecule via an $sp^2$ carbon atom, wherein one or a plurality of carbon atoms of the aromatic ring(s) have been replaced with a heteroatom such as nitrogen, oxygen, phosphorus, or sulfur. The heteroaryl groups may be structures with a single or a plurality of aromatic rings, or structures with a single or a plurality of aromatic rings coupled with one or a plurality of non-aromatic rings. In the structures having a plurality of rings, the rings may be fused, bonded covalently or bonded together via a divalent common group such as a methylene, ethylene, carbonyl group. Examples of heteroaryl groups are the thiophene (2-thienyl, 3-thienyl), pyridine (2-pyridyl, 3-pyridyl, 4-pyridyl), isoxazole, phthalimide, pyrazole, indole, furan groups and the benzofused analogues thereof, phenyl pyridyl ketone, quinoline, phenothiazine, carbazole, benzopyranone.

A (hetero)aryl group represents a heteroaryl or aryl group.

The suffix "-ene" is used to describe a divalent group. Thus, any of the monovalent groups defined herein can be modified with the suffix "-ene" to describe a divalent version of that moiety. For example, a divalent alkyl group is "alkylene". Alkylene groups are connected to the rest of the molecule via two $sp^3$ carbon atoms.

In the present application, alkyl groups preferably comprise from 1 to 6 carbon atoms, more preferably from 1 to 4 carbon atoms, from 1 to 3 carbon atoms, or from 1 to 2 carbon atoms.

The saturated divalent radical of formula $-R^1-R^4-$ defined in the present application comprises carbon atoms and

optionally heteroatoms such as oxygen, nitrogen and sulfur in its main chain. Said main chain preferably contains 3 to 5 atoms. The saturated divalent radical of formula $-R^1-R^4-$ preferably represents a substituted or unsubstituted alkylene group, preferably a linear alkylene group of formula $(CH_2)_p$, with p being an integer ranging from 3 to 5, preferably from 3 to 4, or a group of formula $-CHR^6CHR^7CHR^8NR^5-$ in which $R^5$ represents a (hetero)aryl group, a substituted or unsubstituted alkyl group, $R^6$, $R^7$ and $R^8$ independently represent a hydrogen atom, a (hetero)aryl group, a substituted or unsubstituted alkyl group, the nitrogen atom of the main chain of this group being connected to the cyclic carbon atom in the compound of formula (1a). This group is preferably a group of formula $-CH_2CH_2CH_2NR^5-$ in which $R^5$ is as defined previously and preferably represents an alkyl group.

The saturated divalent radical of formula $-R^2-R^3-$ defined in the present application comprises carbon atoms and optionally heteroatoms such as oxygen, nitrogen and sulfur in its main chain. Said main chain preferably contains 3 to 5 atoms. The saturated divalent radical of formula $-R^2-R^3-$ preferably represents a substituted or unsubstituted alkylene group, preferably a linear alkylene group of formula $(CH_2)_p$, with p being an integer ranging from 3 to 5, preferably from 3 to 4.

In one embodiment, $R^2$ and $R^3$ together form, with the two carbon atoms they are attached to, a 5- or 6-member (hetero)aromatic group, for example a 5- or 6-member heteroaromatic group or a 6-member aromatic group such as benzene group that may bear additional substituents as those disclosed above in the context of the aryl group.

In a first preferred embodiment of the invention, Q in the compound of formula (1a) is a group of formula (4) and said tertiary ammonium or iminium cation is an imidazolium compound of formula (2) having its four substituents $R^1$ to $R^4$ defined above:

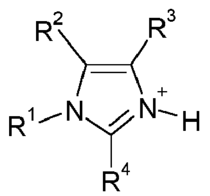

(2)

$R^1$ preferably represents a substituted or unsubstituted alkyl group or a (hetero)aryl group, $R^2$, $R^3$ and $R^4$ independently preferably represent a hydrogen atom, a substituted or unsubstituted alkyl group or a (hetero)aryl group. When $R^2$ and $R^3$ together form, with the two carbon atoms they are attached to, a 6-member aromatic group, the compound of formula (2) is a benzimidazolium cation.

A preferred family of tertiary iminium cations of formula (2) includes compounds in which $R^2 = R^3 = R^4 = H$ and $R^1$ represents a substituted or unsubstituted alkyl group having preferably 1 to 8 carbon atoms. The preferred cation of formula (2) is 1-methylimidazolium:

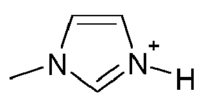

In a second preferred embodiment of the invention, Q in the compound of formula (1a) is an alkylene group of formula $(CH_2)_m$, m being 2 or 3, preferably 3, and $R^1$ and $R^4$ together form a saturated divalent radical of formula $-R^1-R^4-$ representing a substituted or unsubstituted alkylene group. A preferred family of such amidinium compounds has formula (3a):

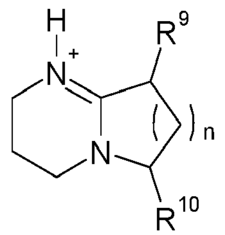

(3a)

in which n represents an integer ranging from 1 to 3 and $R^9$ an $R^{10}$ independently represent hydrogen, a substituted or unsubstituted alkyl group or a (hetero)aryl group.

A preferred family of tertiary iminium cations of formula (3a) includes compounds of formula (3), in which n represents an integer ranging from 1 to 3:

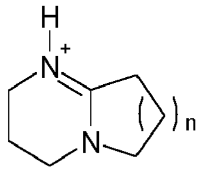

(3)

The preferred amidinium cations of formula (3a) are protonated DBU (1,8-diazabicyclo[5.4.0]undec-7-ene) and protonated DBN (1,5-diazabicyclo[4.3.0]non-5-ene) respectively represented hereunder:

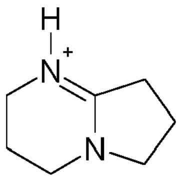

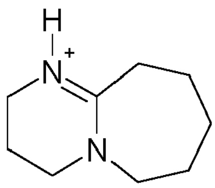

In a third preferred embodiment of the invention, Q in the compound of formula (1a) is an alkylene group of formula $(CH_2)_m$, m being 2 or 3, preferably 3, and $R^1$ and $R^4$ together form a saturated divalent radical of formula $-R^1-R^4-$ representing a group of formula - $CHR^6CHR^7CHR^8NR^5$- in which $R^5$ represents a (hetero)aryl group, a substituted or unsubstituted alkyl group, $R^6$, $R^7$ and $R^8$ independently represent a hydrogen atom, a (hetero)aryl group, a substituted or unsubstituted alkyl group, the nitrogen atom of the main chain of this group being connected to the cyclic carbon atom in the compound of formula (1a). This group is preferably a group of formula $-CH_2CH_2CH_2NR^5$- in which $R^5$ is as defined previously and preferably represents an alkyl group.

A preferred family of such guanidinium compounds has formula (5), in which $R^5$ to $R^8$ are as defined above:

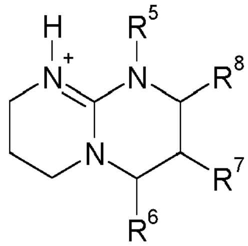

(5)

The preferred guanidinium cations of formula (5) are protonated 7-alkyl-1,5,7-triazabicyclo[4.4.0]dec-5-enes ($R^6$ = $R^7$ = $R^8$ = H and $R^5$ = alkyl having preferably from 1 to 8 carbon atoms) such as protonated 7-methyl-1,5,7-triazabicyclo [4.4.0]dec-5-ene (protonated 7-methyl TBD), represented hereunder:

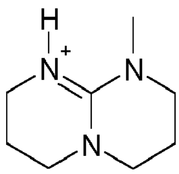

Pyridinium cations constitute another example of tertiary iminium cations according to the invention. Mention may be made of the 2,6-di-tert-butylpyridinium cation or picolinium cation.

Tertiary ammonium cations of formula (6) can also be used:

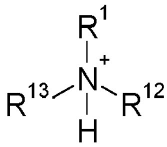

(6)

in which $R^1$, $R^{12}$, $R^{13}$ independently represent a (hetero)aryl group or a substituted or unsubstituted alkyl group, or $R^{12}$ and $R^{13}$ together form a saturated divalent radical of formula - $R^{12}-R^{13}$-, or $R^1$, $R^{12}$ and $R^{13}$ together form a trivalent group of formula (7):

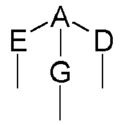

(7)

in which A represents a nitrogen atom or a C-$R^{14}$ group, with $R^{14}$ representing a hydrogen atom, a (hetero)aryl group or a substituted or unsubstituted alkyl group, and E, D and G independently represent a divalent group. $R^{14}$ preferably represents a hydrogen atom. E, D and G preferably represent ethylene groups.

The saturated divalent radical of formula -$R^{12}$-$R^{13}$- defined in the present application comprises carbon atoms and optionally heteroatoms such as oxygen, nitrogen and sulfur in its main chain. Said main chain preferably contains 4 to 6 atoms. The saturated divalent radical of formula -$R^{12}$-$R^{13}$- preferably represents a substituted or unsubstituted alkylene group, preferably a linear alkylene group of formula $(CH_2)_p$, with p being an integer ranging from 4 to 6, preferably from 4 to 5, or a group of formula $-CH_2CH_2OCH_2CH_2-$, or a group of formula - $CH_2CH_2NR^{15}CH_2CH_2-$, $R^{15}$ representing a (hetero) aryl group or a substituted or unsubstituted alkyl group.

Non-limiting examples of such cations include protonated N,N-diisopropylethylamine, protonated N,N-dimethylcyclohexylamine, protonated N-methylmorpholine, protonated N-methylpiperidine, protonated triethylamine and protonated fused or bridged polycyclic amines, preferably bicyclic, wherein at least one of the bridgehead atoms is a nitrogen atom such as a fused or bridged bicyclic diamines having one or two nitrogen bridgehead atoms, in particular protonated 1,4-diazabicyclo[2.2.2]octane (protonated DABCO of formula (9)), or fused or bridged bicyclic amines having one nitrogen bridgehead atom, in particular protonated quinuclidine of formula (8):

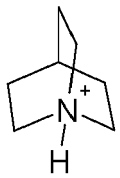

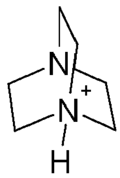

(8) (9)

The preferred tertiary ammonium or iminium cations according to the invention are 1-methylimidazolium, protonated 1,5-diazabicyclo[4.3.0]non-5-ene, protonated 1,8-diazabicyclo[5.4.0]undec-7-ene, protonated 7-methyl-1,5,7-triazabicyclo[4.4.0]dec-5-ene, protonated N,N-diisopropylethylamine, 2,6-di-tert-butylpyridinium, protonated triethylamine, protonated N-methylmorpholine and protonated 1,4-diazabicyclo[2.2.2]octane (protonated DABCO). The four former compounds are the most preferred cations. Tetramethyl guanidinium can also be used.

In a preferred embodiment, the latent catalyst does not comprise NH or $NH_2$ groups. Indeed, those groups with labile protons could react with NCO or NCS groups of the iso(thio)cyanate reactants to form (thio)ureas. In another embodiment, the latent catalyst does not comprise secondary amine groups or primary amine groups. In another embodiment, the latent catalyst does not comprise OH or SH groups. In another embodiment, the latent catalyst does not comprise NH, $NH_2$, OH or SH groups.

The tertiary ammonium or iminium cations according to the invention are commercially available or can be easily synthesized from widely available and relatively cheap raw materials, such as substituted or unsubstituted 2-pyrrolidone, acrylonitrile, substituted or unsubstituted 1,6-hexanedial, 1,3-diaminopropane, through chemical reactions well known to those skilled in the art.

The anion of the latent catalyst salt according to the invention is a borate anion of formula (1b), in which $R^a$, $R^b$, $R^c$ and $R^d$ independently represent a (hetero)aryl group or a substituted or unsubstituted alkyl group:

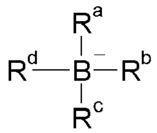

(1b)

$R^a$, $R^b$, $R^c$ and $R^d$ are connected to the boron atom through a carbon atom and preferably represent (hetero)aryl groups, more preferably aryl groups.

In a preferred embodiment, at least two of the $R^a$, $R^b$, $R^c$ and $R^d$ groups are identical or different (hetero)aryl groups.

Non-limiting examples of borate anions of formula (1b) include n-butyltriphenylborate, n-butyltri(1-naphthyl)borate, tetrakis(3-fluorophenyl)borate, tetrakis(pentafluorophenyl) borate and tetraphenyl borate. The anion of formula (1b) is preferably a tetraaryl borate, more preferably tetraphenyl borate, for all tertiary ammonium or tertiary iminium cations mentioned in the present application.

Organoborate anions can be prepared from well-known methods starting from organomagnesium compounds, as disclosed, e.g., in US 2016/0108062.

Latent catalysts according to the invention can be synthesized by reaction of an acidified solution of the nitrogen containing basic organic precursor compound (active form of the catalyst), such as DBU, DBN, 1-methylimidazole or 7-methyl TBD, with an alkali borate precursor, for example a sodium borate compound such as a sodium tetraaryl borate compound, by an ion exchange reaction.

Without wishing to be bound by any theory, the inventors believe that the borate anion acts as a blocker and renders the catalyst catalytically inactive at room temperature.

The latent catalyst according to the invention is a base generator. Its active form is the deprotonated nitrogen containing basic organic compound, which is an imine (such as an amidine, a guanidine, an imidazole) or an amine. The ionic bond of the salt catalyst can be broken upon activation, preferably by heating, to regenerate the basic active form of the catalyst.

The activation temperature of the latent catalyst, i.e., the temperature at which the salt decomposes to regenerate the basic compound, may vary depending on the nature of the borate anion blocking component.

Preferably, the nitrogen containing basic organic compound generated by activating the latent catalyst according to the invention has a pKa ranging from 8 to 15. In the present application, pKa is preferably expressed at 25°C. pKa can be measured in water at standard pressure by potentiometric (pH) titration, using a glass electrode and a pH meter.

Several latent catalysts according to the invention can be combined in the present process. In particular, two or more latent catalysts with different activation temperatures can be employed. In this case, a first latent catalyst having an activation temperature lower than that of a second latent catalyst can form a gel while minimizing defects, and then the second latent catalyst is triggered at a higher temperature to drive the polymerization to completion. Such relay catalytic systems can have the advantage of relayed heat formation during the process, hence reducing localized heat spots.

In the context of the present invention, a gel designates the reaction product of components A and B in which the conversion rate of the reactive functions is significantly high. For example, said conversion rate ranges from 50 to 80% and preferably is about 70%.

An additional catalyst (co-catalyst) that is not a heat-activatable latent catalyst according to the invention can also be used in the context of the invention. Among additional non-latent catalysts that can be used in the method of the invention, there may be cited amines, such as tertiary amines (e.g., triethylamine or 3,5-lutidine), organometallic compounds, such as alkyltins or alkyltin oxides, in particular dibutyltin dilaurate, dibutyltin dichloride and dimethyltin dichloride.

Among additional latent catalysts that can be used in the method of the invention, there may be cited nitrogen containing basic organic compounds blocked by isocyanates or salts of these compounds with benzoic acid.

When an additional catalyst is present, it is preferably used in a molar ratio [latent catalyst according to the invention/additional catalyst] higher than or equal to 40/1, more preferably higher than or equal to 50/1.

In one embodiment, the method according to the invention does not use a catalyst that is not a heat-activatable latent catalyst.

The mixing of first component A with second component B during step 3) to form a polymerizable mixture can be performed by any known mixing technique such as those mentioned in US 5973098. Preferably, components A and B to be mixed are added in a small reactor chamber and then mixed with a screw mixer. In one embodiment, the viscosity at 25°C of the mixture of components A and B ranges from 0.01 Pa.s to 5 Pa.s, preferably from 0.05 Pa.s to 0.5 Pa.s, even more preferably from 0.1 Pa.s to 0.3 Pa.s.

During step 3), a molding cavity of a casting mold assembly can be filled with the resulting polymerizable mixture of first and second components A and B.

More specifically, the optical material composition can be poured into the cavity of two mold parts held together using an annular closure such as a gasket or tape. Depending on the desired characteristics of the resulting optical material, degassing can be performed under reduced pressure and/or filtration can be performed under increased pressure or reduced pressure before pouring the optical material composition in the mold. After pouring the composition, the casting mold, preferably a lens casting mold, can be heated in an oven or a heating device immersed in water according to a predetermined temperature program to cure the resin in the mold.

The curing step of the mixture, which provides a transparent substrate, is performed in the presence of the catalyst according to the invention, and can be implemented using any well known polymerization technique and in particular thermal polymerization including induction and/or infrared heating, or radiation polymerization.

The curing does not start at room temperature, but at a temperature higher than the activation temperature, due to the thermal decomposition of the latent salt catalyst that releases the base. Once started, the curing is fast due to the high reactivity of amine or imine catalyst generated. The curing time of step 4) is preferably lower than 10 or 5 hours, more

preferably lower than 4, 3 or 2 hours. As used herein, curing refers to a chemical process of converting a monomer or an oligomer into a polymer of higher molar mass and then into a network.

Curing is generally carried out at elevated temperature in an oven in order to complete polymerization, for example an air oven. It can be effected at a temperature ranging from 50 to 150°C, or from 100 to 130°C. Thereafter, the mold assembly is withdrawn from the heating source, the annular closure member is removed and the mold parts disassembled.

The resulting resin product may then be annealed, if necessary, at a temperature preferably ranging from 100°C to 150°C.

In one embodiment of the invention, the process according to the invention does not comprise any photopolymerization step. In another embodiment, the latent catalyst according to the invention is not activated by irradiation with light to accelerate the polymerization reaction forming the polythiourethane-based transparent substrate.

In step 5) of the present process, the polythiourethane transparent substrate is recovered, typically from the casting mold assembly if a mold was used. The recovered substrate or article can then be edged to obtain a lens.

The present process can be used to manufacture a finished lens, having both sides at the required geometries, or a semi-finished lens, having one face that still needs to be surfaced at the required geometry.

Thereafter the substrate or article can be tinted or coated to improve various properties such as scratch resistance or reflection properties.

Specific examples of polythiourethane resins suitable to the present invention are those marketed by the Mitsui Chemicals company as MR® series, in particular MR6®, MR7® (refractive index: 1.67), MR8® (refractive index: 1.6) resins, MR10® (refractive index: 1.67). These optical materials as well as the monomers used for their preparation are especially described in the patents US 4,689,387, US 4,775,733, US 5,059,673, US 5,087,758 and US 5,191,055.

From the viewpoint of curability, the thickness of the cured product is preferably 10 mm or less, more preferably 6 mm or less, and even more preferably 3 mm or less. The thickness of the cured product is preferably 10 nm or more, more preferably 50 nm or more, and even more preferably 100 nm or more.

The invention also relates to a polymerizable mixture, comprising:

- a first component A comprising:

  - at least one polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer, or
  - at least one polyisocyanate or polyisothiocyanate monomer A2,

- a second component B comprising at least one polythiourethane pre-polymer B1 having thiol end groups, said pre-polymer B1 having been prepared from at least one polythiol monomer and at least one polyisocyanate or polyisothiocyanate monomer,
- at least one heat-activatable latent catalyst composed of a tertiary ammonium or tertiary iminium cation and a borate anion of formula (1b), in which $R^a$, $R^b$, $R^c$ and $R^d$ independently represent a (hetero)aryl group or a substituted or unsubstituted alkyl group:

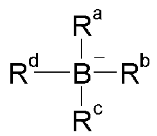
(1b)
,

or:

- a first component A comprising:

  - at least one polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer,

- a second component B comprising at least one polythiol monomer B2,
- at least one heat-activatable latent catalyst composed of a tertiary ammonium or tertiary iminium cation and a borate anion of formula (1b), in which $R^a$, $R^b$, $R^c$ and $R^d$ independently represent a (hetero)aryl group or a substituted or unsubstituted alkyl group:

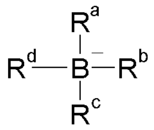
(1b)

.

The polymerizable mixture according to the invention intended to form a polythiourethane resin can be distinguished from the polymerizable mixtures obtainable by the prior art processes using other catalysts by means of its extended shelf life at room temperature, which is very interesting to extend the processing time before filling to the molds with said polymerizable mixture. Due to the low reactivity of the latent catalysts according to the invention at room temperature in thiourethane systems, the polymerizable mixture can be stored for several hours before being processed.

The following examples illustrate the present invention in a more detailed, but non-limiting manner. Unless stated otherwise, all thicknesses disclosed in the present application relate to physical thicknesses.

EXAMPLES

1. Chemicals used

Optical materials were prepared from a composition comprising polymerizable compounds, a delayed action catalyst, and Zelec UN® (CAS 3896-11-5) as a mold release agent. The monomers used in the present examples were m-xylylene diisocyanate (CAS 3634-83-1) and 2,3-bis((2-mercaptoethyl)thio)-1-propanethiol (CAS 131538-00-6), in order to produce a polythiourethane transparent matrix having a refractive index of 1.67.

The latent catalysts according to the invention were prepared from the following amines or imines:1-methylimidazole (noted 1MI, CAS 616-47-7), 1,5-diazabicyclo[4.3.0]non-5-ene (DBN, CAS 3001-72-7), 1,8-diazabicyclo[5.4.0]undec-7-ene (DBU, CAS 6674-22-2) or 7-methyl-1,5,7-triazabicyclo[4.4.0]dec-5-ene (7-methyl TBD, noted GN, CAS 84030-20-6) as described in § 3.

The following comparative heat-activatable latent catalysts were used:

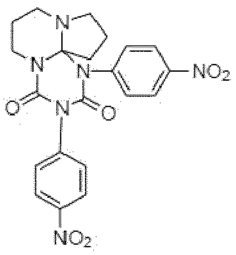
DBN/$NO_2$PhNCO

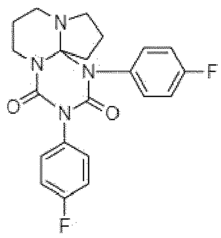
DBN/FPhNCO

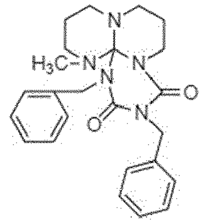
GN/BnNCO

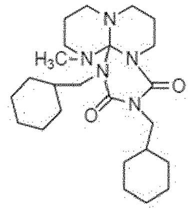
GN/Cyc$CH_2$NCO

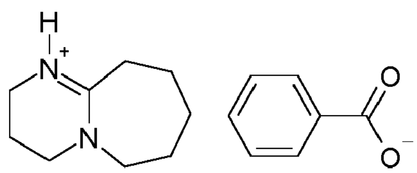
DBU/BA

DBN blocked by isocyanate-type catalysts DBN/$NO_2$PhNCO and DBN/FPhNCO were synthesized according to the method disclosed in European patent application n° 22305961.9 from 1,5-diazabicyclo[4.3.0]non-5-ene (DBN) and an adequate isocyanate compound (4-fluorophenylisocyanate or 4-nitrophenylisocyanate).

7-methyl-1,5,7-triazabicyclo[4.4.0]dec-5-ene blocked by isocyanate-type catalysts GN/BnNCO and GN/Cyc$CH_2$NCO were synthesized according to the method disclosed in European patent application n° 22305961.9 from 7-methyl-1,5,7-triazabicyclo[4.4.0]dec-5-ene ) and an adequate isocyanate compound (benzylisocyanate or cyclohexylmethylisocyanate).

DBU blocked by benzoic acid was synthesized according to the method disclosed in European patent application n° 22305961.9.

Two non-latent catalyst were used for comparative purposes: dimethylin dichloride and the catalyst system disclosed in US 2003/125410 (8.5 % KSCN, 34.84 % 18-crown-6, 56.66 % 2-mercaptoethanol, by weight).

2. Evaluation of the polymerizable composition and of lenses after curing

The following test procedures were used to evaluate the compositions and optical articles prepared according to the present invention. Several samples for each system were prepared for measurements and the reported data were calculated with the average of the different samples.

Viscosity was measured over time using a viscometer (Cone & Plate Viscometer, Model CAP 2000+L from Brookfield) at room temperature.

The glass transition temperature (Tg) and tensile storage modulus (E') of the lenses have been evaluated by DMA (dynamic mechanical analysis) using a dynamic mechanical analyzer Q800 module supplied by TA Instruments. Measurements were conducted in the multi-frequency strain mode. A sample was in rectangular shape with dimensions of 50x8x2 mm. The operating was performed at a heating rate of 2°C/min from 25-130°C at a 30 μm amplitude, pre-load force 0.5 N with force track 150 %. The storage modulus makes it possible to evaluate the ability of the material to store an input mechanical energy elastically.

DSC (Differential scanning calorimetry) was used to compare the reactivity of the different catalysts and determine the activation temperature of the latent catalysts. The device used was a differential scanning calorimeter DSC 823e supplied by Mettler Toledo. The experiments were carried out under nitrogen with a flow rate of 60 mL/min. Sample weights were 5-12 mg to ensure sufficient sensitivity for heat capacity measurements.

3. Synthesis of the iminium borate latent catalysts

In a Duran bottle, the basic precursor (1-methylimidazole, 7-methyl-1,5,7-triazabicyclo[4.4.0]dec-5-ene, DBU or DBN, 10 mmol) was dissolved in deionized water (5 mL) and 36% HCl solution (1 mL). In a separate container, $NaBPh_4$ (11 mmol) was solubilized in $H_2O$ (120 mL) and stirred until the solution was homogeneous. Then, both solutions were mixed and stirred until a white salt formed as precipitate (1 hour). The salt was filtered, washed thoroughly with distilled water and methanol and dried overnight at room temperature. It was recrystallized with acetone, the crystals were washed with the same solvent, dried at room temperature and stored in a desiccator.

The structures of the latent catalysts according to the invention that have been prepared are shown hereunder, the latter being 1-methylimidazolium tetraphenylborate:

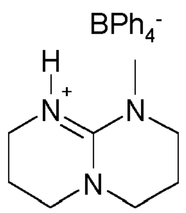

$GNH^+/BPh_4^-$

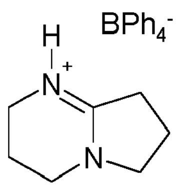

$DBNH^+/BPh_4^-$

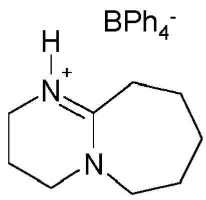

$DBUH^+/BPh_4^-$

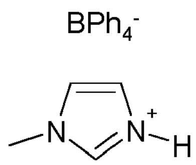

$1MIH^+/BPh_4^-$

These blocked catalysts can be deblocked by heating, releasing the basic (amine or imine) active form of the catalyst (DBU, DBN, 1-methylimidazole or 7-methyl-1,5,7-triazabicyclo[4.4.0]dec-5-ene).

4. Preparation of polythiourethane pre-polymer A1 having isocyanate end groups

In a reactor equipped with a condenser, a thermal probe and an agitator, a determined amount of the polyisocyanate monomer m-xylylene diisocyanate (33.62 % wt.) was charged and heated up to 118°C. Then, 2,3-bis((2-mercaptoethyl)thio)-1-propanethiol was introduced and mixed with the polyisocyanate in an amount (10.34 % wt.) such that the molar ratio of the isocyanate functions to the thiol functions NCO/SH was 3:1. The mixture was heated for 3.5 hours and then cooled to room temperature and an additional amount of the polyisocyanate monomer m-xylylene diisocyanate (56.04 % wt.) was added to the mixture. The resulting mixture was transferred into an appropriate container, tapped with inert gas (nitrogen or argon) and stored in a cold room. The final molar ratio of NCO/SH was 8:1. Pre-polymerA1 with isocyanate end groups was prepared without the use of catalyst.

5. Preparation of polythiourethane pre-polymer B1 having thiol end groups

In a reactor equipped with a condenser, a thermal probe and an agitator, a determined amount of the polythiol monomer 2,3-bis((2-mercaptoethyl)thio)-1-propanethiol (66.05 % wt.) was charged and heated up to 93°C. Then, m-xylylene diisocyanate was introduced and mixed with the polythiol in an amount (11.93 % wt.) such that the molar ratio of

the thiol functions to the isocyanate functions SH/NCO was 6:1. The mixture was heated for 3.5 hours and then cooled to room temperature and an additional amount of the polythiol monomer 2,3-bis((2-mercaptoethyl)thio)-1-propanethiol (22.02 % wt.) was added to the mixture. The resulting mixture was transferred into an appropriate container, tapped with inert gas (nitrogen or argon) and stored in a cold room. The final molar ratio of SH/NCO was 8:1. Pre-polymer B1 with thiol end groups was prepared without the use of catalyst.

6. Preparation of polythiourethane transparent casted substrates

Convex and concave molds were assembled by using a tape. Center thickness was 2 mm. 51.55 g of the pre-polymer A1 mixture prepared above were mixed with 0.16 g of Zelec UN® and a latent catalyst according to the invention or a comparative catalyst in a content specified in table 1. This mixture was stirred at room temperature and degassed for 45 minutes to form component A. 48.45 g of the pre-polymer B1 mixture prepared above were separately stirred at room temperature and degassed for 45 minutes to form component B. Components A and B were then mixed in a small reactor while stirring and degassing for 30 minutes at room temperature. Once the mixing was complete, molds were filled with the help of a clean syringe. The assembled molds were held at room temperature for 10 minutes before inserting them in a convection oven heated at 120°C for 3h to carry out the polymerization reaction. After the polymerization process, the assembled molds were removed from the oven and allowed to cool at room temperature for 5-10 minutes. The molds were then disassembled to obtain plano (no power) lenses with 2 mm center thickness comprising a body of polythiourethane transparent thermoset substrate having a refractive index of 1.67 and no optical defects such as striations. The lenses were cleaned by immersion and sonication in a surfactant solution, then rinsed and dried.

The thermo-mechanical properties of the optical articles prepared using the different catalysts is shown in table 1.

Table 1

| Example | Catalyst | Catalyst content (%) | Tg (DMA) (°C) | E' (GPa) |
|---|---|---|---|---|
| 1 | $GNH^+$ / $BPh_4^-$ | 0.03 | 81.80 | 3.84 |
| 2 | $1MIH^+$ / $BPh_4^-$ | 0.05 | 85.13 | 4.27 |
| 3 | $DBNH^+$ / $BPh_4^-$ | 0.05 | 84.82 | 4.15 |
| 4 | $DBUH^+$ / $BPh_4^-$ | 0.06 | 82.72 | 3.79 |
| C2 | KSCN, 18-crown-6, 2-mercaptoethanol | 0.40 | 84.00 | 4.00 |
| C3 | DBN/FPhNCO | 0.03 | 89.38 | 4.10 |
| C4 | DBN/$NO_2$PhNCO | 0.02 | 87.84 | 3.92 |
| C5 | GN/BnNCO | 0.02 | 87.11 | 4.13 |
| C6 | GN/Cyc$CH_2$NCO | 0.02 | 89.85 | 3.52 |
| C7 | DBU/BA | 0.02 | 85.32 | 4.02 |
| C8 | Dimethyltin dichloride | 0.01 | 89.24 | 3.91 |

The thermal properties of the substrates made using the latent catalysts according to the invention are similar to those of the substrates prepared using other catalysts. The substrates of examples 2 and 3 exhibit the highest storage modulus.

Within 3 hours of polymerization, the latent catalysts according to the invention allowed to reach the same conversion levels as the standard catalysts (99 %).

7. Comparison of the reactivity of the different catalysts by viscosity increase over time at room temperature

The variation of viscosity of a mixture of components A and B prepared above, containing pre-polymers A1 and B1, in the presence of various catalysts at different concentrations, was studied over 5 hours of storage at room temperature (23-25°C). A viscosity index was defined as the increase in viscosity with time in comparison to the initial viscosity. This parameter was set to omit the impact of batch-to-batch variations in prepolymers. By observing the rate of viscosity increase, the impact of catalyst latency on the system can be quantified.

$$\text{Viscosity index} = \eta_t / \eta_i$$

$\eta_i$= viscosity measured after mixing part A and part B for 30 min.
$\eta_t$ = viscosity measured over storage time at room temperature.

The latent catalysts allow a more significant control of the polymerization reaction at room temperature, since they are in a blocked state, so that the reactivity of the system is limited, as evidenced by the low rate of viscosity increase (figures 1-4).

It can be seen on figure 1 that the latent catalysts according to the invention exhibit a relatively low reactivity a room temperature, close to that of the reference mixture of reactants stored in the absence of catalyst, for various weight concentrations of catalyst.

At the maximum catalyst concentration used, the viscosity increases after 5 hours were less than 3 times the initial viscosity, which is still perfectly suitable for handling (the initial viscosity of the mixture was 115±25 cP). As a comparison, the catalyst system disclosed in US 2003/125410 (8.5 % KSCN, 34.84 % 18-crown-6, 56.66 % 2-mercaptoethanol, by weight) used at a concentration of 0.4 % by weight with respect to the total weight of polymerizable compounds present in the mixture of components A and B caused the mixture to gel in 20 minutes at room temperature (viscosity > 8,000 cP in 20 minutes).

The comparative latent catalysts have a higher reactivity at room temperature at much lower concentrations and provide polymerizable compositions with much lower pot life than the latent catalysts according to the invention (figures 2, 3 and 4). Figure 4 also shows that free (unblocked) DBU does not show any latent behavior and is much more reactive at room temperature than blocked DBU.

8. Comparison of the reactivity of the different catalysts by DSC

DSC was used for determining the activation temperature of each latent catalyst at different concentrations of catalyst during the polymerization reaction of components A and B described above forming the polythiourethane polymer. The DSC program was set up at 30-280°C, with a heating rate of 10°C/min and run under $N_2$ to observe the effect of the latent catalyst on the reaction rate. It was observed that the activation temperature is independent on the catalyst concentration.

The activation temperature is the temperature at which the latent catalyst begins to dissociate. It is evidenced on the DSC thermograms by the rise of an exothermic peak with respect to the stage at which the polymerization process begins.

The latent catalyst according to the invention regenerates the active form of the catalyst (DBN, DBU, 1-methylimidazole, 7-methyl TBD...) upon activation.

Table 2

| Catalyst | Activation temperature | Type | Latent catalyst | Reactivity factor |
|---|---|---|---|---|
| $GNH^+ / BPh_4^-$ | 60°C | Invention | Yes | 54 |
| $1MIH^+ / BPh_4^-$ | 70°C | Invention | Yes | 47 |
| $DBNH^+ / BPh_4^-$ | 75°C | Invention | Yes | 27 |
| $DBUH^+ / BPh_4^-$ | 60°C | Invention | Yes | 13 |
| $DBN/NO_2PhNCO$ | 60°C | Comparative | Yes | 223 |
| DBN/FPhNCO | 60°C | Comparative | Yes | 328 |
| GN/BnNCO | 55°C | Comparative | Yes | 434 |
| $GN/CycCH_2NCO$ | 55°C | Comparative | Yes | 1188 |
| DBU/BA | 80°C | Comparative | Yes | 860 |
| Dimethyltin dichloride | 30°C | Comparative | No | 175246 |
| - | 85°C | Comparative | - | 14 |
| DBN | | Comparative | No | 426 |
| GN | | Comparative | No | 3606 |
| DBU | | Comparative | No | 18118 |
| 1MI | | Comparative | No | > 2,000,000 |

Latent catalysts obviously show higher activation temperatures than the non-latent catalyst dimethyltin dichloride.

The overall reactivity at room temperature of blocked and unblocked catalysts was evaluated by plotting the slope of viscosity increase over time (between 0 and 3 hours) as a function of the catalyst content, which provides a linear function, as shown on figure 5. The slope of this function obtained by linear regression corresponds to the "reactivity factor" indicated in table 2 for each catalytic system. The reactivity factor (slope) can also be defined in the absence of catalyst.

As expected, catalysts used under the free base form (DBU, DBN, 7-methyl-1,5,7-triazabicyclo[4.4.0]dec-5-ene, 1-methylimidazole) are much more reactive than under one of their blocked forms and limit the pot life of the polymerizable composition. 1-methylimidazole, DBU, 7-methyl-1,5,7-triazabicyclo[4.4.0]dec-5-ene and dimethyltin dichloride have a very high reactivity factor at room temperature and provide an acceleration of the polymerization reaction at very low concentration. The polymerizable composition gelled very quickly with these catalysts, so that it was not possible to measure viscosity at high concentration of catalyst.

A better control of the polymerization reaction was obtained by using latent catalysts, and it can be observed that the ammonium or iminium borate catalysts according to the invention have the lowest reactivity factors at room temperature. The viscosity of the composition only slightly increased upon storage and could be maintained at a low level similar to a polymerizable composition devoid of catalyst for at least 6 hours.

## Claims

1. A process of curing a polythiourethane-based transparent substrate, comprising the following steps 1), 2), 3), 4) and 5), 1), 2'), 3), 4) and 5) or 1'), 2), 3), 4) and 5):

    1) Providing a first component A comprising at least one polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer, or
    1') Providing a first component A comprising at least one polyisocyanate or polyisothiocyanate monomer A2,
    2) Providing a second component B comprising at least one polythiourethane pre-polymer B1 having thiol end groups, said pre-polymer B1 having been prepared from at least one polythiol monomer and at least one polyisocyanate or polyisothiocyanate monomer, or
    2') Providing a second component B comprising at least one polythiol monomer B2,
    3) Mixing together first and second components A and B to form a polymerizable mixture,
    4) Curing said polymerizable mixture to obtain a polythiourethane-based transparent substrate, and
    5) Recovering the polythiourethane-based transparent substrate,
    wherein at least one heat-activatable latent catalyst composed of a tertiary ammonium or tertiary iminium cation and a borate anion of formula (1b), in which $R^a$, $R^b$, $R^c$ and $R^d$ independently represent a (hetero)aryl group or a substituted or unsubstituted alkyl group, is added in the process prior to curing step 4),

    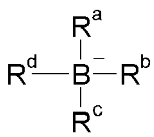 (1b)

    and said latent catalyst is subsequently activated to accelerate the polymerization reaction forming the polythiourethane-based transparent substrate.

2. The process of claim 1, wherein said latent catalyst is added to the polythiol and polyisocyanate or polyisothiocyanate monomers during the preparation of said polythiourethane pre-polymer A1 having isocyanate or isothiocyanate end groups or to the polythiol and polyisocyanate or polyisothiocyanate monomers during the preparation of said polythiourethane pre-polymer B1 having thiol end groups.

3. The process of claim 1, wherein said latent catalyst is added to the first component A obtained in step 1) or 1') prior to mixture with component B or to the second component B obtained in step 2) or 2') prior to mixture with component A.

4. The process of claim 1, wherein said latent catalyst is added to the mixture of components A and B in step 3).

5. The process according to any one of the preceding claims, wherein said latent catalyst is activated during curing step 4).

**6.** The process according to any one of the preceding claims, wherein said latent catalyst is activated by heating at a temperature of at least 35°C, preferably at least 60°C.

**7.** The process according to any one of the preceding claims, comprising no photo-polymerization step.

**8.** The process according to any one of the preceding claims, wherein said tertiary ammonium or tertiary iminium cation is an iminium compound of formula (1a):

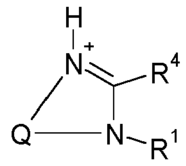

(1a)

in which $R^1$ represents a (hetero)aryl group, a substituted or unsubstituted alkyl group and $R^4$ represents a hydrogen atom, a (hetero)aryl group, a substituted or unsubstituted alkyl group or $R^1$ and $R^4$ together form a saturated divalent radical of formula $-R^1-R^4-$, and Q represents:

- an alkylene group of formula $(CH_2)_m$, m being 2 or 3, or
- a group of formula (4):

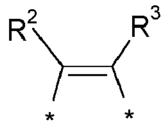

(4)

in which $R^2$ and $R^3$ independently represent a hydrogen atom, a (hetero)aryl group or a substituted or unsubstituted alkyl group or $R^2$ and $R^3$ together form, with the two carbon atoms they are attached to, a 5- or 6-member (hetero)aromatic group or a saturated divalent radical of formula $-R^2-R^3-$, and "*" denotes the attachment point of group (4) in formula (1a).

**9.** The process according to any one of the preceding claims, wherein said tertiary ammonium or tertiary iminium cation is a compound of formula (2):

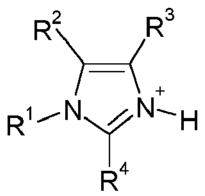

(2)

wherein $R^1$ represents a substituted or unsubstituted alkyl group or a (hetero)aryl group, $R^2$, $R^3$ and $R^4$ independently represent a hydrogen atom, a substituted or unsubstituted alkyl group or a (hetero)aryl group.

**10.** The process according to any one of claims 1 to 8, wherein said tertiary ammonium or tertiary iminium cation is a compound of formula (3), in which n represents an integer ranging from 1 to 3:

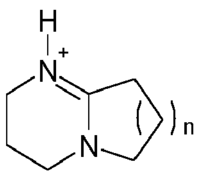

(3)

**11.** The process according to any one of claims 1 to 7, wherein said tertiary ammonium or tertiary iminium cation is an ammonium compound of formula (6):

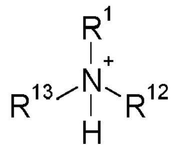 (6)

in which $R^1$, $R^{12}$, $R^{13}$ independently represent a (hetero)aryl group or a substituted or unsubstituted alkyl group, or $R^{12}$ and $R^{13}$ together form a saturated divalent radical of formula - $R^{12}$-$R^{13}$-, or $R^1$, $R^{12}$ and $R^{13}$ together form a trivalent group of formula (7):

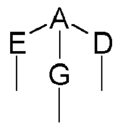 (7)

in which A represents a nitrogen atom or a C-$R^{14}$ group, with $R^{14}$ representing a hydrogen atom, a (hetero)aryl group or a substituted or unsubstituted alkyl group, and E, D and G independently represent a divalent group.

**12.** The process according to any one of claims 1 to 7, wherein said tertiary ammonium or tertiary iminium cation is 1-methylimidazolium, protonated 1,5-diazabicyclo[4.3.0]non-5-ene, protonated 1,8-diazabicyclo[5.4.0]undec-7-ene, protonated N,N-diisopropylethylamine, 2,6-di-tert-butylpyridinium, protonated triethylamine, protonated 7-methyl-1,5,7-triazabicyclo[4.4.0]dec-5-ene, protonated N-methylmorpholine or protonated 1,4-diazabicyclo[2.2.2]octane.

**13.** The process according to any one of the preceding claims, wherein the anion of formula (1b) is tetraphenyl borate.

**14.** The process according to any one of the preceding claims, wherein the substrate is an optical lens substrate.

**15.** A polymerizable mixture, comprising:

- a first component A comprising:

  - at least one polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer, or
  - at least one polyisocyanate or polyisothiocyanate monomer A2,

- a second component B comprising at least one polythiourethane pre-polymer B1 having thiol end groups, said pre-polymer B1 having been prepared from at least one polythiol monomer and at least one polyisocyanate or polyisothiocyanate monomer,
- at least one heat-activatable latent catalyst composed of a tertiary ammonium or tertiary iminium cation and a borate anion of formula (1b), in which $R^a$, $R^b$, $R^c$ and $R^d$ independently represent a (hetero)aryl group or a substituted or unsubstituted alkyl group:

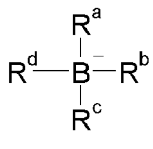 (1b)

,

or:
- a first component A comprising:

  - at least one polythiourethane pre-polymer A1 having isocyanate or isothiocyanate end groups of formula -NCX where X is O or S, said pre-polymer A1 having been prepared from at least one polythiol monomer and at least one polyisocyanate or polyisothiocyanate monomer,

- a second component B comprising at least one polythiol monomer B2,

- at least one heat-activatable latent catalyst composed of a tertiary ammonium or tertiary iminium cation and a borate anion of formula (1b), in which $R^a$, $R^b$, $R^c$ and $R^d$ independently represent a (hetero)aryl group or a substituted or unsubstituted alkyl group:

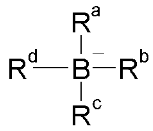

(1b)

.

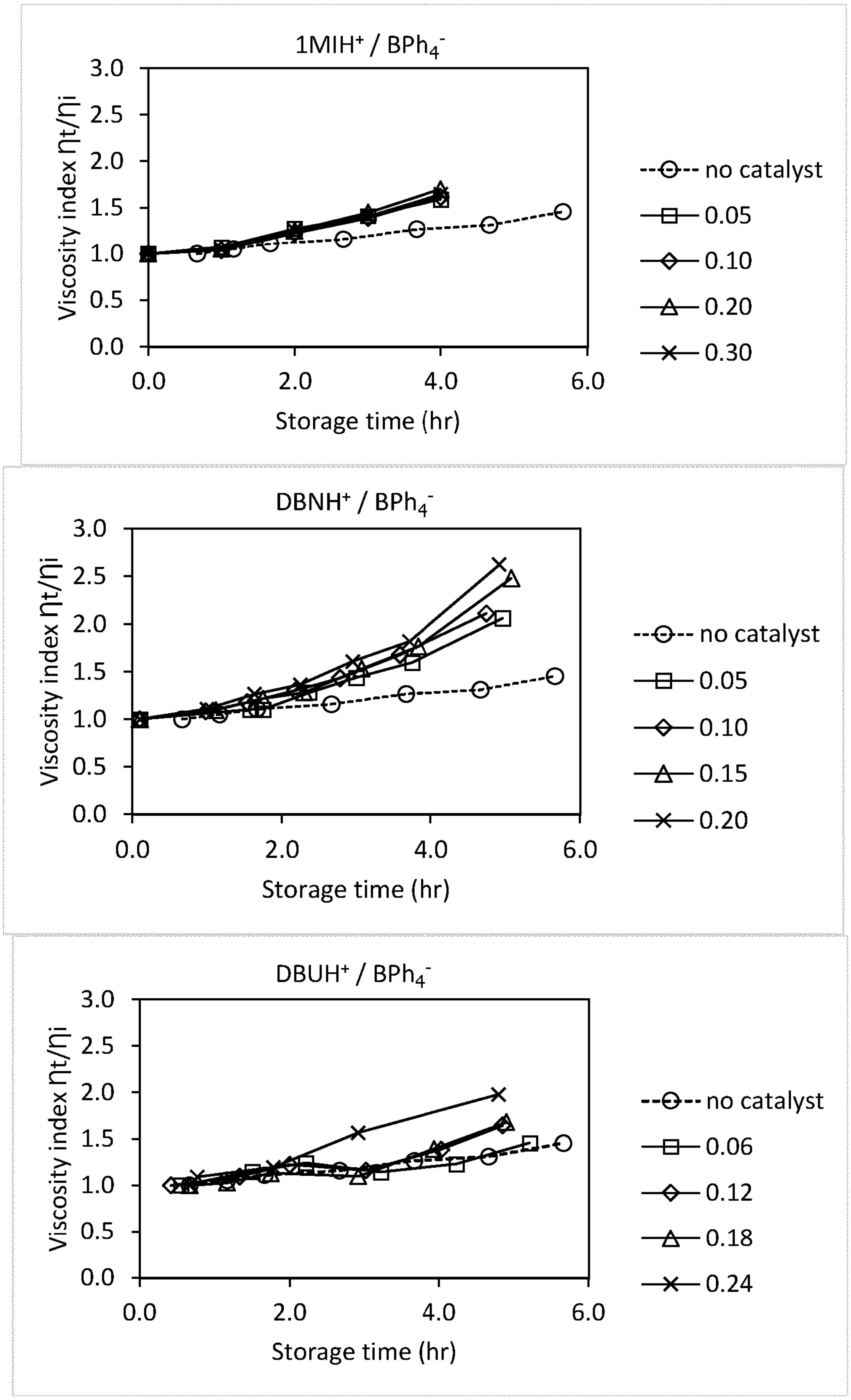
1MIH+ / BPh4-
Viscosity index ηt/ηi
Storage time (hr)
no catalyst
0.05
0.10
0.20
0.30
DBNH+ / BPh4-
Viscosity index ηt/ηi
Storage time (hr)
no catalyst
0.05
0.10
0.15
0.20
DBUH+ / BPh4-
Viscosity index ηt/ηi
Storage time (hr)
no catalyst
0.06
0.12
0.18
0.24

Figure 1

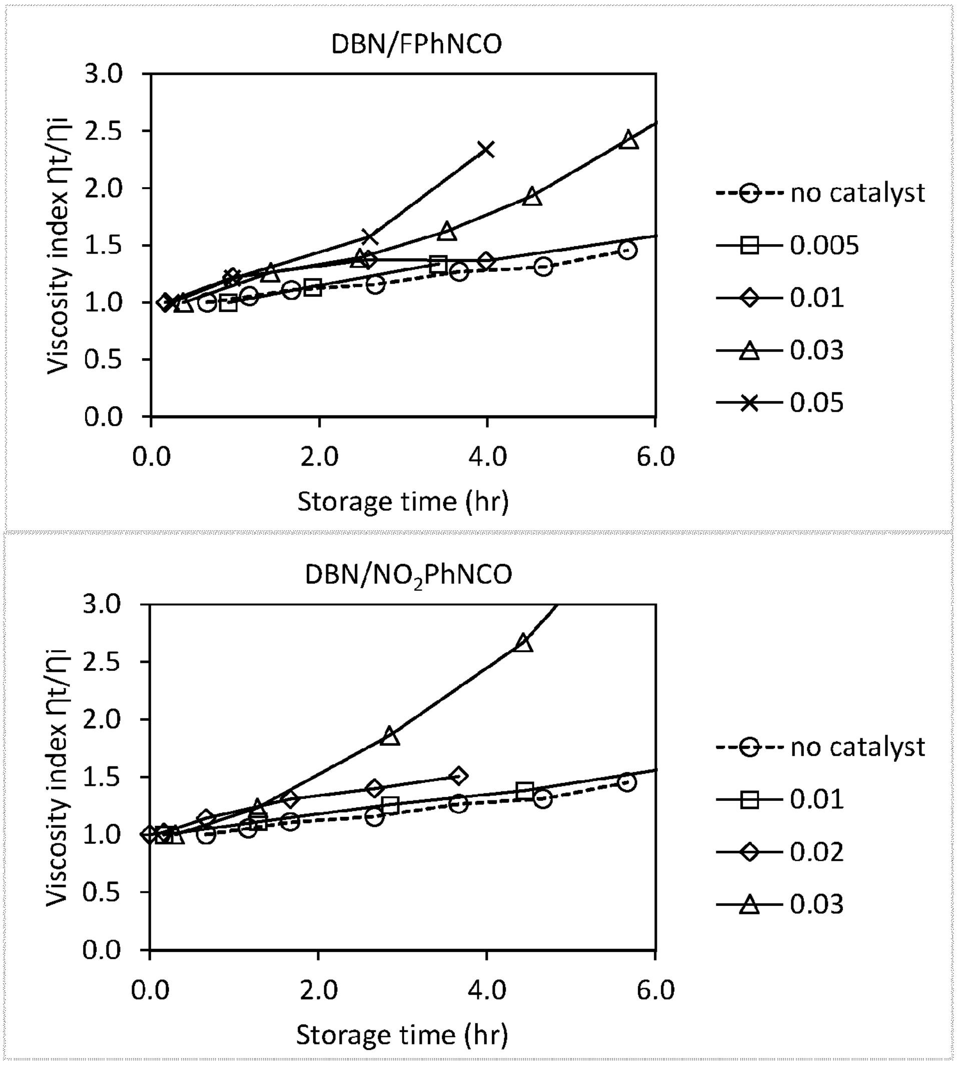


Figure 2

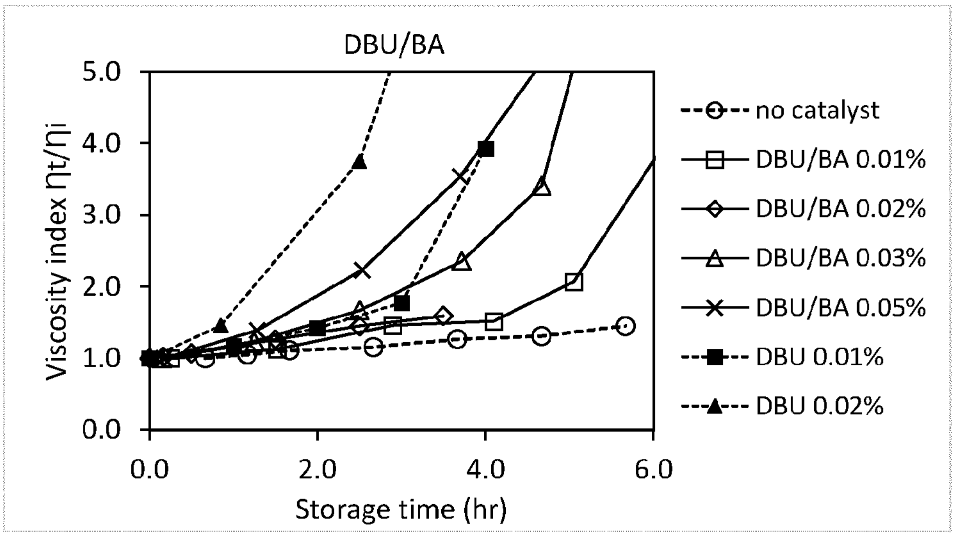


Figure 4

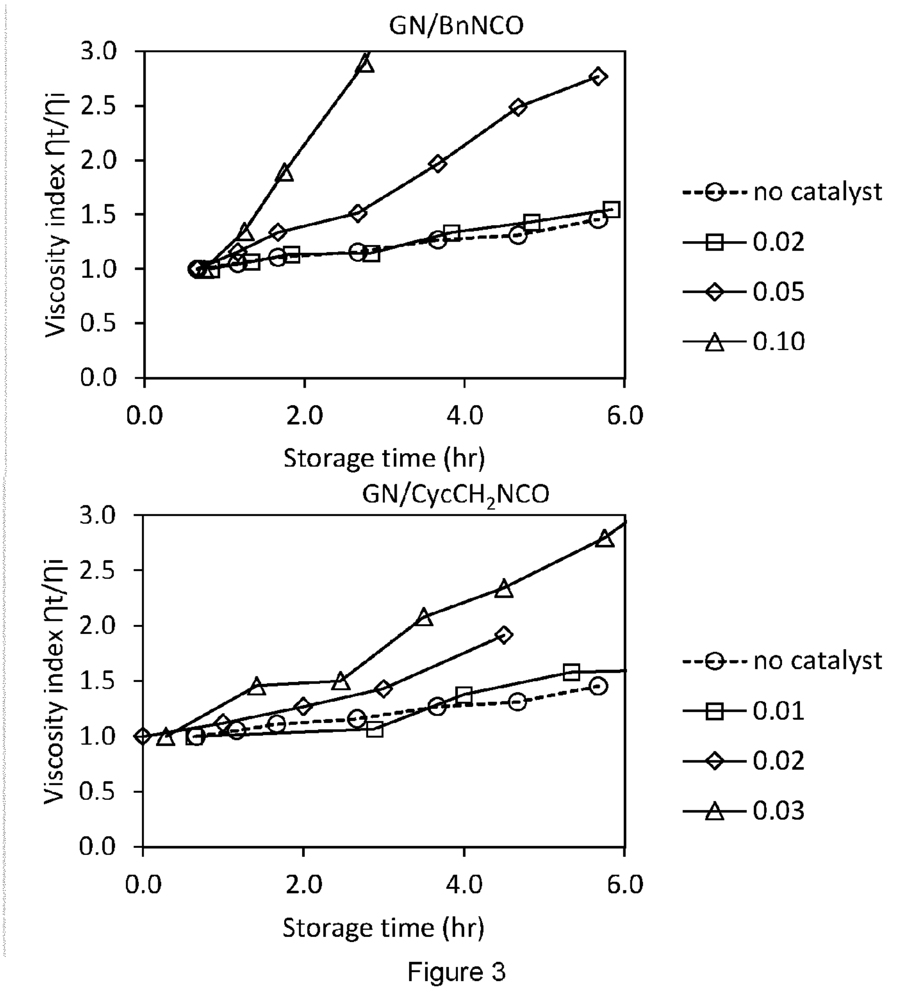


Figure 3

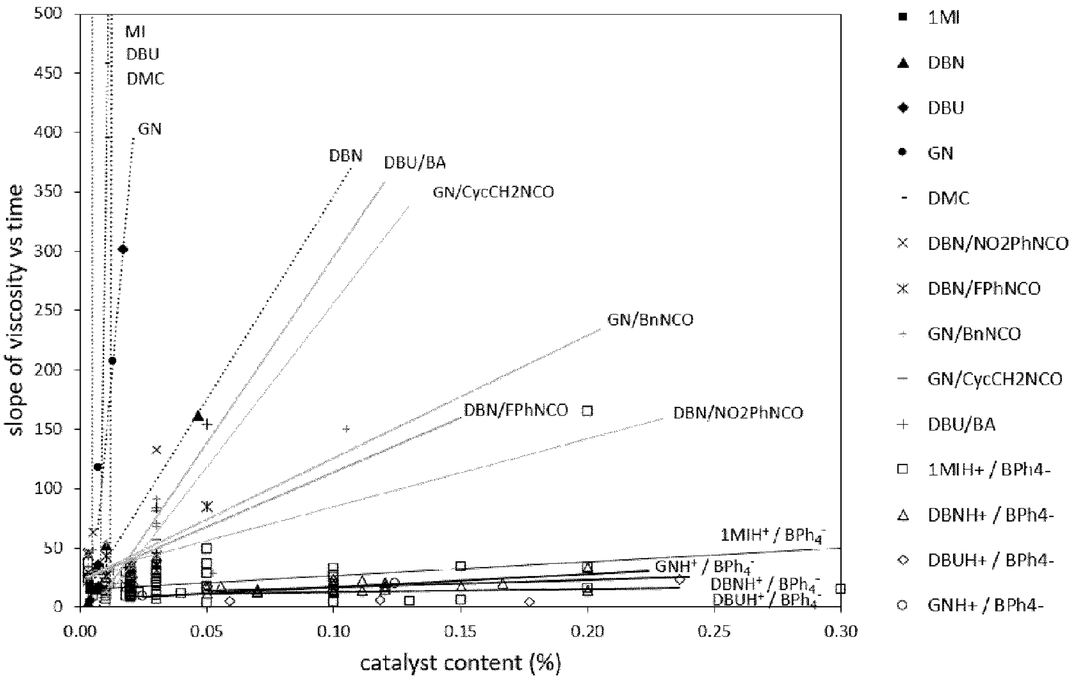


Figure 5

Europäisches Patentamt
European Patent Office
Office européen des brevets

# EUROPEAN SEARCH REPORT

Application Number
EP 23 30 7367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAMARDELLA FRANCESCO ET AL: "Preparation of poly(thiourethane) thermosets by controlled thiol-isocyanate click reaction using a latent organocatalyst", REACTIVE AND FUNCTIONAL POLYMERS, vol. 134, 2019, pages 174-182, XP085569912, ISSN: 1381-5148, DOI: 10.1016/J.REACTFUNCTPOLYM.2018.11.019 * abstract * * page 175, right-hand column, paragraph 2 - page 176, left-hand column, paragraph 3 * * page 179, left-hand column, last paragraph * * Schemes 2 and 3; page 180, right-hand column, paragraph 1 - page 181, left-hand column, paragraph 2; figures; tables * ----- | 1-9, 12-15 | INV. C08G18/10 C08G18/20 C08G18/38 C08G18/76 C08G18/80 C08L75/04 G02B1/04 |
| X | GAMARDELLA FRANCESCO ET AL: "Recyclable Organocatalyzed Poly(Thiourethane) Covalent Adaptable Networks", POLYMERS, vol. 12, no. 12, 4 December 2020 (2020-12-04), page 2913, XP093138289, CH ISSN: 2073-4360, DOI: 10.3390/polym12122913 | 1-10, 12-15 | TECHNICAL FIELDS SEARCHED (IPC) |
| A | * abstract * * page 3, paragraph 2 - page 4, paragraph 4 * * page 13, paragraph 3-6; figures; tables * ----- -/-- | 11 | G02B C08G C08L |

The present search report has been drawn up for all claims

1

| Place of search | Date of completion of the search | Examiner |
|---|---|---|
| Munich | 28 June 2024 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 23 30 7367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIN JUNGHWAN ET AL: "Properties of polythiourethanes prepared by thiol-isocyanate click reaction", JOURNAL OF APPLIED POLYMER SCIENCE, vol. 135, no. 14, 8 December 2017 (2017-12-08), page 46070, XP093057064, US ISSN: 0021-8995, DOI: 10.1002/app.46070 Retrieved from the Internet: URL:https://api.wiley.com/onlinelibrary/tdm/v1/articles/10.1002%2Fapp.46070> * abstract * * page 3, left-hand column, paragraph 2 - page 4, right-hand column, paragraph 2 * * page 7, left-hand column, paragraphs 3, 4; figures; tables * ----- | 1-7, 11-15 | |
| A | WO 03/040205 A1 (ESSILOR INT [FR]) 15 May 2003 (2003-05-15) * abstract * * claims; examples * ----- | 1-15 | |
| | | | TECHNICAL FIELDS SEARCHED (IPC) |

The present search report has been drawn up for all claims

1

| Place of search | Date of completion of the search | Examiner |
|---|---|---|
| Munich | 28 June 2024 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 23 30 7367

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| WO 03040205 A1 | 15-05-2003 | AT E344809 T1 | 15-11-2006 |
| | | CA 2465796 A1 | 15-05-2003 |
| | | CN 1599763 A | 23-03-2005 |
| | | DE 60215970 T2 | 26-07-2007 |
| | | EP 1448650 A1 | 25-08-2004 |
| | | JP 4215642 B2 | 28-01-2009 |
| | | JP 2005508417 A | 31-03-2005 |
| | | KR 20040063136 A | 12-07-2004 |
| | | US 2003125410 A1 | 03-07-2003 |
| | | WO 03040205 A1 | 15-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003125410 A
- EP 3916470 A
- EP 3919967 A
- EP 0182203 A
- EP 22305961
- WO 2023063398 A
- WO 9837115 A
- WO 2014133111 A
- EP 1877839 A
- EP 394495 A
- US 4775733 A
- US 5908876 A
- WO 2017137372 A
- US 4975328 A
- EP 271839 A
- US 20160108062 A
- US 5973098 A
- US 4689387 A
- US 5059673 A
- US 5087758 A
- US 5191055 A

### Non-patent literature cited in the description

- *CHEMICAL ABSTRACTS*, 3896-11-5
- *CHEMICAL ABSTRACTS*, 3634-83-1
- *CHEMICAL ABSTRACTS*, 131538-00-6
- *CHEMICAL ABSTRACTS*, 616-47-7
- *CHEMICAL ABSTRACTS*, 3001-72-7
- *CHEMICAL ABSTRACTS*, 6674-22-2
- *CHEMICAL ABSTRACTS*, 84030-20-6